(19) Europäisches Patentamt
European Patent Office
Office européen des brevets

(11) EP 4 158 728 B1

(12) # EUROPEAN PATENT SPECIFICATION

(45) Date of publication and mention of the grant of the patent:
**27.05.2026 Bulletin 2026/22**

(21) Application number: **21813117.5**

(22) Date of filing: **28.04.2021**

(51) International Patent Classification (IPC):
***H01Q 3/26*** *(2006.01)* ***H04B 7/06*** *(2006.01)*

(52) Cooperative Patent Classification (CPC):
**H01Q 3/2605; H04B 7/0617**

(86) International application number:
**PCT/IL2021/050493**

(87) International publication number:
**WO 2021/240498 (02.12.2021 Gazette 2021/48)**

(54) **SYSTEM AND METHOD FOR TRANSMITTING RADIO FREQUENCY RADIATION**
SYSTEM UND VERFAHREN ZUR ÜBERTRAGUNG VON FUNKFREQUENZSTRAHLUNG
SYSTÈME ET PROCÉDÉ DE TRANSMISSION D'UN RAYONNEMENT RADIOFRÉQUENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2020 IL 27489020**

(43) Date of publication of application:
**05.04.2023 Bulletin 2023/14**

(73) Proprietor: **Elta Systems Ltd.**
**7710201 Ashdod (IL)**

(72) Inventor: **MAUDA, Roi**
**7194000 Paduel (IL)**

(74) Representative: **Kramer, Dani et al**
**Mathys & Squire**
**The Shard**
**32 London Bridge Street**
**London SE1 9SG (GB)**

(56) References cited:
**US-A- 5 396 256**
**US-A1- 2005 018 597**
**US-A1- 2012 092 217**
**US-A1- 2015 236 413**
**US-A1- 2016 308 597**
**US-A1- 2019 219 619**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNOLOGICAL FIELD

The present invention relates to antenna arrays, and more particularly to techniques for transmitting radio frequency (RF) radiation in a predetermined direction within a predetermined frequency band by an antenna array.

### BACKGROUND

A phased array antenna is an electronically controlled array of multiple antenna elements which operate together to transmit or receive electro-magnetic radiation. The phased array generates an electro-magnetic radiation beam that can be electronically steered to a desired direction(s) without physically moving the antenna elements. In operation, the electro-magnetic waves, radiated by each antenna element, combine and superpose (i.e., interfering constructively) to enhance the power of the beam radiated in desired direction(s), while suppressing and reducing the power of radiation (i.e. interfering destructively) in other undesired directions.

In a phased array, each antenna element is fed with a signal provided by a steering system. The steering system includes a plurality of phase shifters and amplifiers, which are typically controlled by a computer system that can alter the phase and amplitude of the signal electronically, thereby steering the beam of the phased array antenna to the desired direction(s).

Usually, when antenna arrays operate at a frequency range of up to 3 octaves, for example: 2-6 GHz, 6-18 GHz, etc. (i.e., when the maximum frequency of the range is up to 3 times the lower frequency), "null points" may appear in the gain diagram at certain frequencies beyond this range due to mutual coupling between the antenna elements of the phased array. Null points occur at the frequencies at which the amount of transmitted energy is less than a certain value. At these null points, some part of the energy is reflected back to the system from the antenna elements that may cause severe damage to the system.

One reason for mutual coupling between the antenna elements stems from reflection, diffraction and scattering of the radiation, thus causing interchange of energy between the antenna elements.

Another reason for mutual coupling is due to the fact that a part of the phase shifted current, which is directed to a certain antenna element, may reach other neighboring antenna elements. Accordingly, the currents are not fully radiated by the corresponding antenna elements, which can result in decrease of the efficiency of the radiating elements.

In phased array antenna systems, the operation frequency bandwidth is determined by the distance between the antenna elements of the phased array system, while the gain is determined by the number of antenna elements in the phased array system.

U.S. Pat. Publication No. 2016/308597 describes a method for a transmitting device transmitting signals in a mobile communication system using multiple antennas. The method includes: precoding a digital signal, acquiring information on an error caused by a phase shifting of the precoding, performing a phase compensation on the digital signal based on the acquired information.

U.S. Pat. Publication No. 2005/018597 describes a radio base-station apparatus. The apparatus includes: a transmission weight computing section for computing a transmission weight for directional transmission using an OFDM signal, a transmission correcting value memory section for storing one correcting value for correcting the transmission weight for each sub-carrier of an OFDM signal or each band gathering a plurality of sub-carriers, a transmitting weight correcting section for correcting the transmission weight with the correcting value, and a transmitting branch for weighting transmission data with a transmission weight outputted from the transmission weight correcting section on a sub-carrier-by-sub-carrier basis and deliver it to an antenna element.

### GENERAL DESCRIPTION

Prior art phased array antenna systems suffer from several drawbacks since the frequency bandwidth in such systems can only be tailored by changing the structural parameters of the system, i.e., changing the distance between the antenna elements of the phased array antenna. Another drawback is the fact that some of the energy is transmitted in undesired directions, thereby forming sidelobes. Accordingly, the gain in the direction of interest can be decreased.

Thus, there is still a need in the art for, and it would be useful to have, a novel system for operating the phased array system at frequencies outside the predetermined bandwidth of transmission of the phased array system without changing the structural parameters of this system.

It would be advantageous to have a phased array system that can provide a high antenna gain, while attenuating the reflected energy at the null points.

The present invention addresses the deficiencies of conventional phased array systems, and provides a novel transmission system for transmitting radio frequency (RF) radiation in a predetermined direction at a sequence of K

frequencies selected from a predetermined frequency range by an antenna array that comprises a predetermined number *N* of antenna elements. It should be noted that the predetermined frequency range can include null points that occur at certain frequencies within the predetermined frequency range.

The transmission system includes an RF signal generator. The RF signal generator is configured for generating electrical signals at a sequence of K frequencies. Each electrical signal has an initial amplitude and an initial phase. In operation, the electrical signals are relayed to the phased antenna array at the sequence of K frequencies through *N* transmission channels corresponding to the *N* antenna elements.

The transmission system also includes a modification system arranged downstream of the RF signal generator. In the present application, an arrangement of one element downstream of another element implies electrical coupling of these elements to each other with a possibility to transfer electrical signals between the elements in the direction of the current associated with the transferring of the electrical signals.

The modification system is configured for receiving and processing the electrical signals from the RF signal generator for obtaining optimal electrical signals. In the present application, the optimal electrical signals refer to the electrical signals for which a transmission efficiency coefficient of the transmission system is equal to or greater than a predetermined threshold value. In particular, the optimal electrical signals include optimal unmodified signals provided by the RF signal generator and optimal modified signals generated by the modification system.

The transmission system also includes a steering system arranged downstream of said modification system and coupled to said antenna array. The steering system is configured for receiving the optimal electrical signals obtained from the modification system and generating steering electrical signals related to the optimal electrical signals. The steering electrical signals are relayed via the *N* transmission channels to the antenna array to form a steered beam for transmission in the predetermined direction.

The modification system includes an efficiency determination unit. The efficiency determination unit is configured for receiving the electrical signals at the sequence of *K* frequencies from the RF signal generator and for calculating the transmission efficiency coefficient of the transmission system for each *k-th* frequency $f_k$.

The modification system also includes a comparing unit. The comparing unit is configured for receiving the transmission efficiency coefficient for each *k-th* frequency $f_k$ from the efficiency determination unit and comparing the transmission efficiency coefficient with the predetermined threshold value. The modification system is also configured for separating electrical signals corresponding to the frequencies for which the transmission efficiency coefficient is less than the predetermined threshold value, from the electrical signals corresponding to the frequencies for which the transmission efficiency coefficient is equal to or greater than the predetermined threshold value. In operation, the modification system provides the electrical signals corresponding to the frequencies for which the transmission efficiency coefficient is equal to or greater than the predetermined threshold value to the steering system.

The modification system further includes a randomization unit. The randomization unit is configured for receiving the electrical signals corresponding to the frequencies for which the transmission efficiency coefficient is less than a predetermined threshold value, and iteratively modifying these electrical signals by randomizing amplitude and phase of these electrical signals, thereby generating randomized signals. Each randomized signal has a corresponding randomized amplitude and randomized phase. In operation, the modification system provides in each iteration the randomized signals to the efficiency determination unit to calculate transmission efficiency coefficient for the randomized signals.

It should be noted that null-points can occur at one or more frequencies within the sequence of K frequencies. The transmission efficiency coefficient for the electrical signals which correspond to these frequencies (at which null points can occur) is below the predetermined threshold value. The modification system receives and iteratively modifies these electrical signals until the transmission efficiency coefficient for these electrical signals is equal to or greater than the predetermined threshold value. As a result of the iterative modification of these electrical signals, the null points are removed.

According to an embodiment, the optimal modified signals are the randomized signals for which the transmission efficiency coefficient is equal to or greater than the predetermined threshold value. Likewise, the optimal unmodified signals are electrical signals for which the transmission efficiency coefficient is equal to or greater than the predetermined threshold value. It should be noted that the optimal unmodified signals are electrical signals which have the initial amplitude and the initial phase.

According to an embodiment, the randomization system is configured for performing iterative modification of the electrical signals corresponding to the frequencies for which the transmission efficiency coefficient is less than the predetermined threshold value. The iterative modification is performed until the transmission efficiency coefficient for these electrical signals is equal to or greater than the predetermined threshold value.

According to an embodiment, the transmission efficiency coefficient is calculated by:

$$T_k = \frac{E_{trans}}{E_{total}} \cdot 100\% ,$$

where $E_{total}$ is the total energy of the electrical signals for the *k-th* frequency $f_k$ generated by the RF signal generator and $E_{trans}$ is the energy transmitted in operation for the *k-th* frequency $f_k$.

According to an embodiment, the transmitted energy $E_{trans}$ is calculated by the efficiency determination unit by using the relationship $E_{trans} = E_{total} - E_{lost}$, where $E_{lost}$ is the energy that is lost by the transmission system in operation for the *k-th* frequency $f_k$.

According to an embodiment, the lost energy $E_{lost}$ is calculated by:

$$E_{lost} = \sum_{n=1}^{N} |\widetilde{s}|_n \quad ,$$

where $\widetilde{s_n}$ is a combined energy that an *n-th* antenna element *(n = 1,* 2, ..., N) in the antenna array receives from neighboring antenna elements and a self-reflected energy of the *n-th* antenna element.

According to an embodiment, the combined energy $\widetilde{s_n}$ is calculated by:

$$\begin{pmatrix} \widetilde{s_1} \\ \widetilde{s_2} \\ \widetilde{s_3} \\ \vdots \\ \widetilde{s_N} \end{pmatrix} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix} \cdot \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix},$$

where $V_k^{init} = \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}_k$ is an initial excitation vector representing the electrical signals for *N* transmission channels for each *k-th* frequency $f_k$, and $S = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix}$ is a coupling matrix characterizing mutual coupling between antenna elements and a self-reflected energy of the antenna elements in the antenna array.

According to an embodiment, the transmitted energy $E_{trans}$ of the transmission system is calculated by:

$$E_{trans} = E_{total} - E_{lost} = \sum_{n=1}^{N} |A_n e^{j\varphi_n}| - \sum_{n=1}^{N} |\widetilde{s}|_n$$

According to an embodiment, the randomizing of the amplitude and the phase of the electrical signals is carried out by iteratively generating two random numbers. Each random number is in the interval [0, 1]. The initial amplitude and the initial phase of the electrical signals are multiplied by these two random numbers, correspondingly, thereby generating the randomized signals.

According to an embodiment, the two random numbers are different for each electrical signal in an *n*-th transmission channel (*n* = 1, 2, ..., *N*).

According to an embodiment, the randomization system further includes an optimal efficiency determination system. The optimal efficiency determination system is arranged downstream of the randomization unit and coupled to the comparing unit and to the efficiency determination unit.

According to an embodiment, the optimal efficiency determination system is configured for sub-iteratively modifying the two random numbers, thereby generating in each sub-iteration two modified random numbers. The optimal efficiency determination system is also configured for generating modified randomized signals for which the transmission efficiency coefficient is greater than the transmission efficiency coefficient of the randomized signals by using the two

modified random numbers.

According to an embodiment, the optimal efficiency determination system is configured to perform a predetermined number P of sub-iterations to generate the modified randomized signals for which the transmission efficiency coefficient is greater than the transmission efficiency coefficient of the randomized signals provided by the randomization unit.

According to an embodiment, the optimal efficiency determination system includes a modification unit. The modification unit is configured for receiving the electrical signals for which the transmission efficiency coefficient is less than the predetermined threshold value from the comparing unit. The modification unit also receives the corresponding two random numbers for each electrical signal from the randomization unit. The modification unit is also configured for sub-iteratively modifying the electrical signals, thereby generating the modified randomized signals.

The optimal efficiency determination system also includes an efficiency determination sub-unit arranged downstream of the modification unit. The efficiency determination sub-unit is configured for sub-iteratively receiving in each sub-iteration the modified randomized signals from the modification unit and calculating a transmission efficiency coefficient for these modified randomized signals.

The optimal efficiency determination system further includes a storing unit configured for storing the transmission efficiency coefficient for the modified randomized signals and a corresponding excitation vector sub-iteratively received from the efficiency determination sub-unit. The storing unit is also configured for storing the transmission efficiency coefficient for the randomized signals, and a corresponding randomized vector that is iteratively obtained (i.e., obtained in each iteration of the modification system) from the efficiency determination unit.

The optimal efficiency determination system also includes a comparing sub-unit coupled to the storing unit. The comparing sub-unit is configured for sub-iteratively receiving a stored efficiency coefficient from the storing unit and the transmission efficiency coefficient for the modified randomized signals from the efficiency determination sub-unit. The comparing sub-unit is also configured for sub-iteratively comparing the stored efficiency coefficient with the transmission efficiency coefficient of the modified randomized signals. The comparing sub-unit is also configured for providing the transmission efficiency coefficient for the modified randomized signals and the corresponding excitation vector to the storing unit for storing thereof when the value of this transmission efficiency coefficient for the modified randomized signals is greater than the value of said stored efficiency coefficient.

According to an embodiment, the modification of the electrical signals corresponding to the frequencies for which the transmission efficiency coefficient is less than the predetermined threshold value by the modification unit is carried out by multiplying the initial amplitude and the initial phase of each electrical signal by two modified random numbers, correspondingly.

According to an embodiment, the two modified random numbers are generated sub-iteratively by adding $\pm\Delta\beta 1 \cdot p$ and $\pm\Delta\beta_2 \cdot p$ to the two random numbers, correspondingly, where $p$ = 1, 2, ..., $P$.

According to another general aspect of the present invention, there is provided a method for transmitting radio frequency (RF) radiation in a predetermined direction at a sequence of $K$ frequencies by an antenna array comprising a predetermined number $N$ of antenna elements.

The method includes generating electrical signals having an initial amplitude and an initial phase at a sequence of K frequencies. The method also includes processing the electrical signals and obtaining optimal electrical signals for which the transmission efficiency coefficient is equal to or greater than a predetermined threshold value. The optimal electrical signals include optimal unmodified signals and optimal modified signals. According to an embodiment, the method also includes generating steering electrical signals related to the optimal electrical signals. Then, the method includes forming a steered beam based on the steering electrical signals for transmission in the predetermined direction.

The method includes obtaining of the optimal electrical signals. The method includes calculating a transmission efficiency coefficient for each *k-th* frequency $f_k$ of the sequence of K frequencies; The method also includes comparing the transmission efficiency coefficient for each *k-th* frequency $f_k$ with a predetermined threshold value.

The method also includes separating electrical signals corresponding to the frequencies for which the transmission efficiency coefficient is less than the predetermined threshold value, from the electrical signals corresponding to the frequencies for which the transmission efficiency coefficient is equal to or greater than the predetermined threshold value.

The method also includes iteratively modifying the electrical signals corresponding to the frequencies for which the transmission efficiency coefficient is less than a predetermined threshold value. The iterative modification of these electrical signals is carried out by randomizing amplitude and phase of these electrical signals, thereby generating randomized signals. Then, the method also includes providing optimal electrical signals including optimal unmodified signals and optimal modified signals.

According to an embodiment, the optimal modified signals are the randomized signals for which the transmission efficiency coefficient is equal to or greater than the predetermined threshold value, and the optimal unmodified signals are the electrical signals having said initial amplitude and said initial phase for which the transmission efficiency coefficient is equal to or greater than the predetermined threshold value.

According to an embodiment, the iterative modifying of the electrical signals corresponding to the frequencies for

which the transmission efficiency coefficient is less than the predetermined threshold value is performed until the transmission efficiency coefficient for these electrical signals is equal to or greater than the predetermined threshold value, thereby generating the optimal modified signals.

According to an embodiment, the transmission efficiency coefficient is calculated by:

$$T_k = \frac{E_{trans}}{E_{total}} \cdot 100\% \quad ,$$

where $E_{total}$ is the total energy of the electrical signals for the *k-th* frequency $f_k$. $E_{trans}$ is the energy transmitted in operation for the *k-th* frequency $f_k$ calculated by $E_{trans} = E_{total} - E_{lost}$, where $E_{lost}$ is the energy that is lost in operation for the *k-th* frequency $f_k$.

According to an embodiment, the lost energy $E_{lost}$ is calculated by:

$$E_{lost} = \sum_{n=1}^{N} \widetilde{|s|}_n$$

where $\widetilde{s_n}$ is a combined energy that an *n-th* antenna element in the antenna array (14) receives from neighboring antenna elements and a self-reflected energy of the *n-th* antenna element.

According to an embodiment, the combined energy $\widetilde{s_n}$ is calculated by:

$$\begin{pmatrix} \widetilde{s_1} \\ \widetilde{s_2} \\ \widetilde{s_3} \\ \vdots \\ \widetilde{s_N} \end{pmatrix} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix} \cdot \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix},$$

where $V_k^{init} = \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}_k$ is an initial excitation vector representing the electrical signals for *N* transmission channels for each *k-th* frequency $f_k$ and $S = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix}$ is a coupling matrix characterizing mutual coupling between antenna elements and the self-reflected energy of the antenna elements in the antenna array (14).

According to an embodiment, the transmitted energy $E_{trans}$ of the transmission system is calculated by:

$$E_{trans} = E_{total} - E_{lost} = \sum_{n=1}^{N} |A_n e^{j\varphi_n}| - \sum_{n=1}^{N} \widetilde{|s|}_n$$

According to an embodiment, randomizing the amplitude and the phase of the electrical signals is carried out by iteratively generating two random numbers. Each random number is in the interval [0, 1]. The initial amplitude and the initial phase of the electrical signals are multiplied by the two random numbers, correspondingly, thereby generating the randomized signal. The two random numbers can be different for each electrical signal in an *n*-th transmission channel selected from the *N* transmission channels.

According to an embodiment, iterative modifying of the electrical signals further includes providing modified randomized signals for which the transmission efficiency coefficient is greater than the transmission efficiency coefficient

of the randomized signals.

According to another general aspect of the present invention, there is provided a method for providing modified randomized signals for which the transmission efficiency coefficient is greater than the transmission efficiency coefficient of the randomized signals.

According to an embodiment, the method includes receiving and storing the transmission efficiency coefficient of the randomized signals and a corresponding randomized excitation vector. The method also includes sub-iteratively modifying the electrical signals corresponding to the frequencies for which the transmission efficiency coefficient is less than the predetermined threshold value, thereby generating the modified randomized signals. The method also includes sub-iteratively calculating a transmission efficiency coefficient for these modified randomized signals. The method also includes sub-iteratively comparing the transmission efficiency coefficient for the modified randomized signals with a previously stored transmission efficiency coefficient. The method also includes sub-iteratively replacing the previously stored transmission efficiency coefficient and the previously stored randomized excitation vector with the transmission efficiency coefficient for the modified randomized signals and a corresponding modified excitation vector when the transmission efficiency coefficient for the modified randomized signals is greater than the previously stored transmission efficiency coefficient.

According to an embodiment, the providing of the modified randomized signals for which the transmission efficiency coefficient is greater than the transmission efficiency coefficient of the randomized signals is carried out by performing a predetermined number P of sub-iterations.

According to an embodiment, the sub-iterative modifying of the electrical signals corresponding to the frequencies for which the transmission efficiency coefficient is less than the predetermined threshold value is carried out by multiplying the initial amplitude and initial phase of each electrical signal by corresponding two modified random numbers.

According to an embodiment, said two modified random numbers are generated by sub-iteratively adding $\pm\Delta\beta_1 \cdot p$ and $\pm\Delta\beta_2 \cdot p$ to the two random numbers, correspondingly, where $p$ = 1, 2, ..., $P$.

There has thus been outlined, rather broadly, the more important features of the invention in order that the detailed description thereof that follows hereinafter may be better understood. Additional details and advantages of the invention will be set forth in the detailed description, and in part will be appreciated from the description, or may be learned by practice of the invention.

## BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

Fig. 1 illustrates a schematic block diagram of a transmission system configured for transmitting RF radiation in a predetermined direction at a sequence of K frequencies within a predetermined frequency band, according to an embodiment of the present invention;

**Fig. 2** illustrates a schematic flow-chart diagram of a method of operation of a transmission system in **Fig. 1,** according to an embodiment of the present invention;

**Fig. 3** illustrates a schematic block diagram of a transmission system configured for transmitting RF radiation in a predetermined direction at a sequence of *K* frequencies within a predetermined frequency band, according to another embodiment of the present invention;

**Fig. 4** illustrates a schematic flow-chart diagram of a method of operation of a transmission system in **Fig. 3,** according to an embodiment of the present invention;

**Fig. 5** illustrates a schematic flow-chart diagram of a method for providing modified randomized signals, according to an embodiment of the present invention;

**Fig. 6** illustrates an example of the frequency dependence of the transmitted energy of the transmission system shown in **Fig. 3** and the frequency dependence of the transmitted energy of a conventional system, which does not include the modification system; and

**Figs. 7A and 7B** illustrate an example of a radiation azimuth pattern generated by the transmission system shown in **Fig. 3** and a radiation azimuth pattern generated by a conventional system which does not include the modification system at two different frequencies, correspondingly.

## DETAILED DESCRIPTION OF EMBODIMENTS

The principles and operation of the transmission system and method for transmitting RF radiation in a predetermined direction at a sequence of *K* frequencies within a predetermined frequency band according to the present invention may be better understood with reference to the drawings and the accompanying description, it being understood

that these drawings and examples in the description are given for illustrative purposes only and are not meant to be limiting. The same reference Roman numerals and alphabetic characters will be utilized for identifying those components which are common in the transmission system and its components shown in the drawings throughout the present description of the invention. It should be noted that the blocks in the drawings illustrating various embodiments of the present invention are intended as functional entities only, such that the functional relationships between the entities are shown, rather than any physical connections and/or physical relationships.

Some portions of the detailed descriptions, which follow hereinbelow, are presented in terms of algorithms and/or symbolic representations of operations on data represented as physical quantities within registers and memories of a computer system. An algorithm is here conceived to be a sequence of steps requiring physical manipulations of physical quantities and leading to a desired result. Usually, although not necessarily, these quantities take the form of electrical or magnetic signals capable of being stored, transferred, combined, compared, and otherwise manipulated. In the present description, these signals can be referred to as values, elements, symbols, terms, numbers, or the like.

Unless specifically stated otherwise, throughout the description, utilizing terms such as "computing" or "calculating" or "determining" or "obtaining" or the like, refer to the action and processes of a computer system, or similar electronic processing device, that manipulates and transforms data.

Referring to **Fig. 1,** a schematic block diagram of a transmission system **10** for transmitting radio frequency (RF) radiation in a predetermined direction at a sequence of K frequencies within a predetermined frequency band is illustrated, according to an embodiment of the present invention.

The transmission system **10** includes an RF generator **11,** a randomization system **12** arranged downstream of the RF signal generator **11,** a steering system **13** arranged downstream of the modification system **12** and an antenna array **14** comprising a plurality of *N* antenna elements coupled to the steering system **13.**

In the present application, an arrangement of one element downstream of another element implies electrical coupling of these elements to each other with a possibility to transfer electrical signals between the elements in the direction of the current associated with the transferring of the electrical signals.

The RF generator **11** is configured and operable for generating electrical signals through *N* transmission channels, corresponding to *N* antenna elements, for each frequency of the sequence of *K* frequencies $f_1, f_2, ..., f_K$ within the predetermined frequency band. The number *N* of the transmission channels is equal to the predetermined number of antenna elements in the antenna array **14.** In other words, the RF generator **11** can generate electrical signals for each *k-th* frequency $f_k$ (where $k$ = 1, 2, ..., $K$) of the sequence of K frequencies $f_1, f_2, ..., f_K$. Each electrical signal has a corresponding initial amplitude A and an initial phase $\varphi$.

For each transmission channel, electrical signals generated by the RF generator **11** for the *k-th* frequency $f_k$ can be represented by the expression $A_k e^{-j(2\pi \cdot f_k \cdot t + \varphi_k)}$, where $A_k$ is the initial amplitude of this signal, and $\varphi_k$ is the initial phase of this signal.

For *N* transmission channels for each *k-th* frequency $f_k$ of the sequence of *K* frequencies $f_1, f_2, ..., f_K$, the electrical signals can be represented by an initial excitation vector $V_k^{init}$ having *N* vector elements:

$$V_k^{init} = \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}_k$$

The vector elements $A_n e^{j\varphi n}$ ($n$ = 1,2,..., $N$) relate to the corresponding electrical signals of the *k-th* frequency $f_k$ in the corresponding transmission channel. In particular, each vector element in the initial excitation vector $V_k^{init}$ includes the initial amplitude $A_n$ and initial phase $\varphi_n$ of the corresponding electrical signals for the *k-th* frequency $f_k$.

According to an embodiment, the modification system **12** is configured for receiving and processing the electrical signals corresponding to the *N* transmission channels for each *k-th* frequency $f_k$ from the RF signal generator **11.** The modification system **12** is also configured for relaying optimal electrical signals associated with transmission efficiency coefficients greater than a predetermined threshold value to the steering system **13** as described hereinbelow. The optimal electrical signals include optimal unmodified signals provided by the RF signal generator **11** and optimal modified signals generated by the modification system **12** during operation, as also described hereinbelow.

In operation, the modification system **12** calculates a transmission efficiency coefficient $T_k$ of the transmission system **10** for each *k-th* frequency $f_k$ of the sequence of *K* frequencies $f_1, f_2, ..., f_K$ within the predetermined frequency band, and compares the transmission efficiency coefficient $T_k$ with a predetermined threshold value *X.* More specifically, the modification system **12** receives the corresponding excitation vector for each *k-th* frequency $f_k$ of the sequence of *K*

frequencies $f_1$, $f_2$, ..., $f_K$, and utilizes the excitation vector for calculating the transmission efficiency coefficient $T_k$ of the transmission system **10** for each *k-th* frequency $f_k$ as described in further detail below.

According to an embodiment, the modification system **12** is also configured for separating electrical signals corresponding to the frequencies for which the transmission efficiency coefficient $T_k$ is less than the predetermined threshold value *X* from the electrical signals corresponding to the frequencies for which the transmission efficiency coefficient $T_k$ is equal to or greater than the predetermined threshold value *X*.

According to an embodiment, the modification system **12** is also configured for providing the electrical signals corresponding to the frequencies for which the transmission efficiency coefficient $T_k$ is equal to or greater than the predetermined threshold value *X* to the steering system **13.** In other words, the modification system **12** provides the electrical signals through the *N* transmission channels for each frequency for which the transmission efficiency coefficient $T_k$ is equal to or greater than the predetermined threshold value *X* to the steering system **13.** For example, the threshold value *X* can be in the range of 70% - 90%.

Electrical signals having the initial amplitude and the initial phase received from the RF signal generator, which correspond to the frequencies for which the transmission efficiency coefficient $T_k$ is equal to or greater than the predetermined threshold *X* value and which are provided to the steering system **13** are referred to herein as "optimal unmodified signals".

According to an embodiment, the modification system **12** is configured to perform iterative modification of the electrical signals corresponding to the frequencies for which the transmission efficiency coefficient $T_k$ is less than the predetermined threshold value *X*. Specifically, in each iteration, the modification system **12** modifies these electrical signals by randomizing amplitude and phase of these electrical signals, thereby generating randomized signals. The modification system **12** is also configured for calculating updated transmission efficiency coefficient $T_{ran,k}$ for the randomized signals and for comparing this $T_{ran,k}$ with the predetermined threshold value *X* in each iteration. The iterative modification is performed until the transmission efficiency coefficient $T_k$ for these randomized signals is equal to or greater than the predetermined threshold value *X*. As a result of the iterative modification, the transmission efficiency coefficient $T_{ran,k}$ for the randomized signals is greater than the predetermined threshold value *X*.

It should be noted that null-points can occur at one or more frequencies within the sequence of *K* frequencies. The transmission efficiency coefficient $T_k$ for the electrical signals which correspond to these frequencies (at which null points can occur) is below the predetermined threshold value *X*. The modification system **12** receives and iteratively modifies these electrical signals until the transmission efficiency coefficient $T_k$ for these electrical signals is equal to or greater than the predetermined threshold value *X*. As a result of the iterative modification of these electrical signals, the null points are removed.

The randomized signals for which the transmission efficiency coefficient $T_{ran,k}$ is greater than the predetermined threshold value *X* are referred to herein as "optimal modified signals".

The modification system **12** is configured to relay optimal electrical signals, which include the optimal unmodified signals (obtained from the RF signal generator **11**), and the optimal modified signals (obtained from the modification system **12**) to the steering system **13.**

According to an embodiment, the steering system **13** processes the optimal electrical signals and forms a steered beam of the RF radiation to the predetermined direction. The steering system **13** relays the electrical signals corresponding to the steered beam to the antenna array **14** for transmission.

According to an embodiment, the modification system **12** includes an efficiency determination unit **22,** a comparing unit **24** arranged downstream of the efficiency determination unit **22,** and a randomization unit **26** arranged downstream of the comparing unit **24.**

According to an embodiment, the efficiency determination unit **22** is configured to receive the electrical signals for each *k-th* frequency $f_k$ of the sequence of *K* frequencies $f_1$, $f_2$, ..., $f_K$, to process these electrical signals, and to calculate for each *k-th* frequency $f_k$ the transmission efficiency coefficient $T_k$ of the transmission system **10.** The transmission efficiency coefficient $T_k$ represents the amount of energy transmitted by the transmission system **10** for each *k-th* frequency $f_k$ of the sequence of *K* frequencies $f_1$, $f_2$, ..., $f_K$. More specifically, each *k-th* frequency $f_k$ has a corresponding transmission efficiency coefficient $T_k$ associated therewith.

According to an embodiment, the transmission efficiency coefficient $T_k$ can be calculated by:

$$T_k = \frac{E_{trans}}{E_{total}} \cdot 100\% \quad , \qquad (1)$$

where $E_{total}$ is the total energy of the electrical signals for the *k-th* frequency $f_k$ generated by the RF signal generator **11,** and $E_{trans}$ is the energy transmitted by the transmission system **10** in operation for the *k-th* frequency $f_k$.

More specifically, $E_{trans}$ can be calculated by the efficiency determination unit **22** by using a relationship $E_{trans} = E_{total} - E_{lost}$ , where $E_{lost}$ is the energy that is lost by the transmission system **10** in operation for the *k-th* frequency$f_k$.

In particular, $E_{lost}$ is the energy that the transmission system **10** loses due to the mutual coupling between the

antenna elements and the self-reflected energy of the antenna elements in the antenna array **14** when operating at the *k-th* frequency $f_k$.

According to an embodiment, the lost energy $E_{lost}$ of the transmission system **10** can be determined by taking into account the mutual coupling between the antenna elements, i.e., the amount of energy that each antenna element in the antenna array **14** receives from the neighboring antenna elements and the self-reflected energy of the antenna elements, and then summing the energies for all the antenna elements.

The mutual coupling between the antenna elements and the self-reflected energy of the antenna elements in the antenna array **14** are characterized by a coupling matrix $S$. For the antenna array **14** that includes $N$ antenna elements, the coupling matrix $S$ is a $N \times N$ matrix:

$$S = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix}$$

Each non-diagonal coupling coefficient of the coupling matrix $S$ represents the energy received by the corresponding antenna element from the neighboring antenna elements. For example, $s_{12}$ is the energy received by the 1st antenna element from the 2nd neighboring antenna element and, $s_{1_N}$ is the energy received by the 1st antenna element from the *n-th* neighboring antenna element.

The coupling coefficients in the diagonal ($s_{1_1}$, $s_{2_2}$,...,$s_{N_N}$) of the coupling matrix S represent the self-reflected energy of the antenna elements. For example, $s_{1_1}$ is the self-reflected energy of the 1st antenna element and, $s_{N_N}$ is the self-reflected energy of the *N-th* antenna element.

Accordingly, for the antenna array **14** that includes $N$ antenna elements, a combined energy $\widetilde{s_n}$ that the *n-th* antenna element ($n$ = 1, 2, ..., $N$) in the antenna array **14** receives from the neighboring antenna elements and the self-reflected energy of the *n-th* antenna element (for each antenna element) for each *k-th* frequency $f_k$ can be calculated by:

$$\begin{pmatrix} \widetilde{s_1} \\ \widetilde{s_2} \\ \widetilde{s_3} \\ \vdots \\ \widetilde{s_N} \end{pmatrix} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix} \cdot \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}, \qquad (2)$$

Accordingly, the lost energy $E_{lost}$ can be calculated by:

$$E_{lost} = \sum_{n=1}^{N} |\widetilde{s}|_n \qquad (3)$$

Accordingly, the transmitted energy $E_{trans}$ of the transmission system **10** can be calculated by:

$$E_{trans} = E_{total} - E_{lost} = \sum_{n=1}^{N} |A_n e^{j\varphi_n}| - \sum_{n=1}^{N} |\widetilde{s}|_n \qquad (4)$$

As described above, the efficiency determination unit **22** can calculate the transmission efficiency coefficient $T_k$ using equation (1) by using the lost energy $E_{lost}$ and the transmitted energy $E_{trans}$ from equation (3) and (4) correspondingly.

According to an embodiment, the comparing unit **24** is configured for receiving the transmission efficiency coefficient $T_k$ for each *k-th* frequency $f_k$ from the efficiency determination unit **22.** Then, the transmission efficiency coefficient $T_k$ is compared with the predetermined threshold value $X$. Further, the comparing unit **24** separates the electrical signals corresponding to the frequencies for which the transmission efficiency coefficient $T_k$ is less than the predetermined threshold value $X$ from the electrical signals corresponding to the frequencies for which the transmission efficiency coefficient $T_k$ is equal to or greater than the predetermined threshold value $X$. Then, the comparing unit **24** provides the electrical signals corresponding to the frequencies for which the transmission efficiency coefficient $T_k$ is equal

to or greater than the predetermined threshold value $X$ to the steering system **13.** In turn, the electrical signals corresponding to the frequencies for which the transmission efficiency coefficient $T_k$ is less than the predetermined threshold value $X$ are relayed to the randomization unit **26.**

The randomization unit **26** is configured for receiving the electrical signals corresponding to the frequencies for which the transmission efficiency coefficient $T_k$ is less than the predetermined threshold value $X$ and for iteratively modifying these electrical signals.

In particular, the randomization unit **26** is configured for receiving electrical signals for each frequency for which the transmission efficiency coefficient $T_k$ is less than the predetermined threshold value $X$ and for iteratively modifying these electrical signals by modifying their initial excitation vector $V_k^{init}$ in each iteration.

In each iteration, the modification of each electrical signal is performed by randomizing the amplitude and phase of each electrical signal, thereby generating randomized signals. More specifically, modification of the electrical signals is performed by randomizing the amplitude and phase of each vector element in the initial excitation vector $V_k^{init}$ of the electrical signals for each frequency at which the transmission efficiency coefficient $T_k$ is less than a predetermined threshold value $X$.

According to an embodiment, the randomization is carried out by generating two random numbers $\alpha_1$ and $\alpha_2$, each in the interval [0, 1], and multiplying these two random numbers $\alpha_1$ and $\alpha_2$ by the initial amplitude $A_k$ and initial phase $\varphi_k$ correspondingly. As a result of multiplying the modified random number $\alpha_1$ and $\alpha_2$ by the initial amplitudes and initial phases of the electrical signals, randomized signals are obtained. Each randomized signal has a corresponding randomized phase $\varphi_{ran}$ and a randomized amplitude $A_{ran}$. It should be noted that, for each $k$-th frequency, the two random numbers $\alpha_1$ and $\alpha_2$ can be different for each electrical signal in the *n-th* transmission channel ($n$ = 1, 2, ..., $N$).

According to an embodiment, the randomized signals for the *k-th* frequency $f_k$ are represented by a randomized excitation vector $V_k^{ran}$ :

$$V_k^{ran} = \begin{pmatrix} A_{ran,1}e^{j\varphi_{ran,1}} \\ A_{ran,2}e^{j\varphi_{ran,2}} \\ A_{ran,3}e^{j\varphi_{ran,3}} \\ \vdots \\ A_{ran,N}e^{j\varphi_{ran,N}} \end{pmatrix}_k ,$$

The randomization unit **26** is also configured for providing, in each iteration, the randomized excitation vector $V_k^{ran}$ to the efficiency determination unit **22** for calculating an updated transmission efficiency coefficient $T_{ran,k}$ for the randomized signals. This updated transmission efficiency coefficient $T_{ran,k}$ is provided to the comparing unit **24** and compared with the predetermined threshold value $X$ in each iteration. The randomized signals are provided by the comparing unit **24** to the steering system **13** when this transmission efficiency coefficient $T_{ran,k}$ is equal to or greater than the predetermined threshold value $X$.

In turn, when the transmission efficiency coefficient $T_{k,ran}$ for these randomized signals is less than the predetermined threshold value $X$, the modification system **12** performs a further iteration. The iterative modification is performed until the transmission efficiency coefficient $T_{k,ran}$ for the randomized signals is equal to or greater than the predetermined threshold value $X$. In other words, the electrical signals are iteratively modified by the modification system **12** until the transmission efficiency coefficient $T_{k,ran}$ is equal to or greater than the predetermined threshold value $X$.

As mentioned above, the randomized signals for which the transmission efficiency coefficient $T_{ran,k}$ is greater than the predetermined threshold value $X$ are referred to herein as "optimal modified signals".

As mentioned above, null-points can occur at one or more frequencies within the sequence of $K$ frequencies. The transmission efficiency coefficient $T_k$ for the electrical signals which correspond to the frequencies at which null points may appear, is below the predetermined threshold value $X$. The modification system **12** receives and iteratively modifies these electrical signals until the transmission efficiency coefficient $T_k$ for these electrical signals is equal to or greater than the predetermined threshold value $X$. As a result of the iterative modification of these electrical signals, the null points are removed.

According to an embodiment, the steering system **13** is configured for receiving the optimal electrical signals including the optimal modified signals and the optimal unmodified signals obtained from the modification system **12.** The steering system **13** processes the optimal electrical signals to generate steering electrical signals related to the optimal electrical signals. The steering electrical signals are provided to the antenna array **14** via the $N$ transmission channels to form a steered beam for transmission in the predetermined direction.

Referring to **Fig. 2,** a flow chart diagram of a method **20** for transmitting radio frequency (RF) radiation in a

predetermined direction at a sequence of $K$ frequencies within a predetermined frequency band by using the transmission system **10** in **Fig. 1** is illustrated, according to an embodiment of the present invention.

Referring to **Figs. 1** and **2** together, in operation of the transmission system **10,** electrical signals for each frequency of the sequence of $K$ frequencies $f_1, f_2, ..., f_K$ within the predetermined frequency band are generated (block **101**). For each transmission channel, the electrical signals of the *k-th* frequency $f_k$ can be represented by the expression $A_k e^{-j(2\pi \cdot f_k \cdot t + \varphi_k)}$, where $A_k$ is the initial amplitude of this signal, $\varphi_k$ is the initial phase of this signal.

For each *k-th* frequency $f_k$ of the sequence of $K$ frequencies $f_1, f_2, ..., f_K$, the electrical signals can be represented by an initial excitation vector $V_k^{init}$ having $N$ vector elements corresponding to the $N$ transmission channels:

$$V_k^{init} = \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}_k$$

The vector elements $A_n e^{j\varphi n}$ ($n$ = 1,2,..., $N$) relate to the corresponding electrical signals of the *k-th* frequency $f_k$. In particular, each vector element in the initial excitation vector $V_k^{init}$ includes the initial amplitude $A_n$ and initial phase $\varphi_n$ of the corresponding electrical signals for the *k-th* frequency $f_k$.

The method further includes processing the electrical signals and calculating (block **102**) a transmission efficiency coefficient $T_k$ for each *k-th* frequency $f_k$ of the sequence of $K$ frequencies $f_1, f_2, ..., f_k$ within the predetermined frequency band.

According to an embodiment, the transmission efficiency coefficient $T_k$ can be calculated by

$$T_k = \frac{E_{trans}}{E_{total}} \cdot 100\% \quad , \qquad (5)$$

where $E_{total}$ is the total energy of the electrical signals for the *k-th* frequency $f_k$ generated by the RF signal generator **11,** and $E_{trans}$ is the energy transmitted by the transmission system **10** in operation for the *k-th* frequency $f_k$.

More specifically, $E_{trans}$ can be calculated by the efficiency determination unit **22** by $E_{trans} = E_{total} - E_{lost}$ , where $E_{lost}$ is the energy that is lost by the transmission system **10** in operation for the *k-th* frequency $f_k$. In this case, $E_{lost}$ is the energy that the transmission system **10** loses due to the mutual coupling between the antenna elements and the self-reflected energy of the antenna elements in the antenna array **14** when the transmission system **10** operates at the *k-th* frequency $f_k$.

According to an embodiment, the lost energy $E_{lost}$ of the transmission system **10** can be determined by taking into account the mutual coupling between the antenna elements, i.e., the amount of energy that each antenna element in the antenna array **14** receives from the neighboring antenna elements and the self-reflected energy of the antenna elements, and then summing the energies for all the antenna elements.

The mutual coupling between the antenna elements and the self-reflected energy of the antenna elements in the antenna array **14** are characterized by a coupling matrix S. For an antenna array **14** that includes $N$ antenna elements the coupling matrix $S$ is a $N \times N$ matrix:

$$S = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix}$$

Each non-diagonal coupling coefficient of the coupling matrix $S$ represents the energy received by the corresponding antenna element from the neighboring antenna elements. For example, $s_{1_2}$ is the energy received by the 1st antenna element from the 2nd neighboring antenna element and, $s_{1_N}$ is the energy received by the 1st antenna element from the *n-th* neighboring antenna element.

The coupling coefficients in the diagonal ($s_{1_1}$, $s_{2_2}$,...,$s_{N_N}$) of the coupling matrix S represent the self-reflected energy of the antenna elements. For example, $s_{1_1}$ is the self-reflected energy of the 1st antenna element and, $s_{N_N}$ is the self-reflected energy of the *N-th* antenna element.

Accordingly, for an antenna array **14** that includes *N* antenna elements, a combined energy $\widetilde{s_n}$ that the *n-th* antenna element ($n$ = 1,2, ..., $N$) in the antenna array **14** receives from the neighboring antenna elements and the reflected energy of the *n-th* antenna element itself (for each antenna element) for each *k-th* frequency $f_k$ can be calculated by:

$$\begin{pmatrix} \widetilde{s_1} \\ \widetilde{s_2} \\ \widetilde{s_3} \\ \vdots \\ \widetilde{s_N} \end{pmatrix} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix} \cdot \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}, \quad (2)$$

Accordingly, the lost energy $E_{lost}$ can be calculated by:

$$E_{lost} = \sum_{n=1}^{N} \widetilde{|s|}_n \qquad (3),$$

where $\widetilde{|s|}_n$ is the energy received by the *n*-th antenna element from the neighboring elements and *N* is the number of antenna elements in the antenna array **14.**

Accordingly, the transmitted energy $E_{trans}$ of the transmission system **10** can be calculated as follows:

$$E_{trans} = E_{total} - E_{lost} = \sum_{n=1}^{N} |A_n e^{j\varphi_n}| - \sum_{n=1}^{N} \widetilde{|s|}_n \qquad (4)$$

As described above, the efficiency determination unit **22** can calculate the transmission efficiency coefficient $T_k$ using equation (1) by using the lost energy $E_{lost}$ and the transmitted energy $E_{trans}$ from equations (3) and (4) correspondingly.

The method also includes comparing the transmission efficiency coefficient $T_k$ (block **103**) for each *k-th* frequency $f_k$ with a predetermined threshold value *X*. Then, electrical signals corresponding to the frequencies for which the transmission efficiency coefficient $T_k$ is less than the predetermined threshold value *X* are separated from the electrical signals corresponding to the frequencies for which the transmission efficiency coefficient $T_k$ is equal to or greater than the predetermined threshold value *X*.

The method also includes providing optimal unmodified signals, which are the electrical signals (block **104**) corresponding to the frequencies for which the transmission efficiency coefficient $T_k$ is equal to or greater than the predetermined threshold value *X*, to the steering system **13**. For example, the threshold value *X* can be in the range of 70% - 90%.

According to an embodiment, the method also includes performing iterative modification of the electrical signals corresponding to the frequencies for which the transmission efficiency coefficient is less than the predetermined threshold value X.

In the iterative modification, the electrical signals corresponding to the frequencies for which the transmission efficiency coefficient is less than the predetermined threshold value *X* are modified (block **105**) by modifying the initial excitation vector $V_k^{init}$ for these electrical signals.

According to an embodiment, in each iteration, the modification of such electrical signals is performed by randomizing the corresponding amplitudes and phases of these electrical signals, thereby generating randomized signals. More specifically, the modification of the electrical signals is performed by randomizing amplitude and phase of each vector element in the initial excitation vector $V_k^{init}$ of the electrical signals for each frequency $f_k$ for which the transmission efficiency coefficient $T_k$ is less than a predetermined threshold value *X*.

According to an embodiment, the randomization is carried out by generating two random numbers $\alpha_1$ and $\alpha_2$, each in the interval [0, 1], and multiplying these two random numbers $\alpha_1$ and $\alpha_2$ by the initial amplitude $A_k$ and initial phase $\varphi_k$ correspondingly. As a result of multiplying the modified random number $\alpha_1$ and $\alpha_2$ by the initial amplitudes and initial phases of the electrical signals, randomized signals are obtained. Each randomized signal has a corresponding randomized phase $\varphi_{ran}$ and a randomized amplitude $A_{ran}$. It should be noted that, for each *k*-th frequency the two random numbers $\alpha_1$ and $\alpha_2$ can be different for each electrical signal in the *n*-th transmission channel ($n$ = 1, 2, ..., $N$).

According to an embodiment, the randomized signals for the *k-th* frequency $f_k$ are represented by a randomized excitation vector $V_k^{ran}$ :

$$V_k^{ran} = \begin{pmatrix} A_{ran,1} e^{j\varphi_{ran,1}} \\ A_{ran,2} e^{j\varphi_{ran,2}} \\ A_{ran,3} e^{j\varphi_{ran,3}} \\ \vdots \\ A_{ran,N} e^{j\varphi_{ran,N}} \end{pmatrix}_k ,$$

As shown in **Fig. 2,** the iterative modification also includes calculating a transmission efficiency coefficient $T_{ran,k}$ for the randomized signals, as described above, *mutatis mutandis.*

Further, the transmission efficiency coefficient $T_{ran,k}$ for the randomized signals is compared with the predetermined threshold value $X$ in each iteration. When this transmission efficiency coefficient $T_k$ is equal to or greater than the predetermined threshold value $X$, these randomized signals, which are the optimal modified signals, are provided to the steering system **13.** In turn, when the transmission efficiency coefficient $T_k$ for the randomized signals is less than the predetermined threshold value $X$, a further iteration is performed. The iterative modification is performed until the transmission efficiency coefficient $T_{ran,k}$ for the randomized signals is equal to or greater than the predetermined threshold value $X$. In other words, in the iterative modification, the electrical signals are modified until the transmission efficiency coefficient $T_{ran,k}$ is equal to or greater than the predetermined threshold value $X$.

It should be noted that null-points can occur at one or more frequencies within the sequence of $K$ frequencies. The transmission efficiency coefficient $T_k$ for the electrical signals which correspond to these frequencies (at which null points can occur) is below the predetermined threshold value $X$. These electrical signals are iteratively modified until the transmission efficiency coefficient $T_k$ for these electrical signals is equal to or greater than the predetermined threshold value $X$. As a result of the iterative modification of these electrical signals, the null points are removed.

The method further includes generating the optimal electrical signals, which include the optimal modified signals and the optimal unmodified signals, and providing these optimal electrical signals to the steering system **13** to generate steering electrical signals related to the optimal electrical signals.

The method further includes providing the steering electrical signals via the $N$ transmission channels to the antenna array **14** to form a steered beam for transmission in the predetermined direction.

Referring to **Fig. 3,** a schematic block diagram of a transmission system **30** for transmitting radio frequency (RF) radiation in a predetermined direction at a sequence of $K$ frequencies within a predetermined frequency band is illustrated, according to another embodiment of the present invention. The transmission system **30** includes an RF generator **11,** a modification system **31** arranged downstream of the RF signal generator **11,** a steering system **13** arranged downstream of the modification system **31** and the antenna array **14** comprising a plurality of $N$ antenna elements coupled to the steering system **13.**

As described above, the RF generator **11** is configured and operable for generating electrical signals through $N$ transmission channels (corresponding to $N$ antenna elements in the antenna array **14**) for each frequency of the sequence of $K$ frequencies $f_1$, $f_2$, ..., $f_K$ within the predetermined frequency band.

The modification system **31** is configured for receiving the electrical signals from the RF generator **11,** processing these electrical signals, and obtaining optimal electrical signals having transmission efficiency coefficients greater than a predetermined threshold value $X$. The optimal electrical signals are relayed to the steering system **31** as described hereinbelow. The optimal electrical signals include the optimal unmodified signals provided by the RF signal generator **11** and the optimal modified signals generated by the modification system **31** during operation, as described hereinbelow.

As described above, the electrical signals having the initial amplitude and initial phase, which correspond to the frequencies for which the transmission efficiency coefficient $T_k$ is equal to or greater than the predetermined threshold $X$ value and which are provided to the steering system **13** are referred to herein as "optimal unmodified signals".

According to this embodiment, the modification system **31** includes an efficiency determination unit **22,** a comparing unit **24** arranged downstream of the efficiency determination unit **22,** and a randomization unit **26** arranged downstream of the comparing unit **24.**

As can be seen in **Fig. 3,** the modification system **31** differs from the modification system **(12** in **Fig. 1)** in the fact that the randomization system **31** also includes an optimal efficiency determination system **310** arranged downstream of the randomization unit **26** and coupled to the comparing unit **24** and the efficiency determination unit **22.**

According to an embodiment, the optimal efficiency determination system **310** is configured for modifying the two random numbers $\alpha_1$ and $\alpha_2$ and for generating modified randomized signals for which the transmission efficiency coefficient $T_{mod,k}$ is greater than the transmission efficiency coefficient $T_{ran,k}$ of the randomized signals. The generating of the modified randomized signals is carried out by using two modified random numbers. These modified randomized signals are obtained by the optimal efficiency determination system **310** by performing a predetermined number $P$ of sub-iterations as described below in detail.

According to an embodiment, the efficiency determination unit **22** is configured to receive the electrical signals for

each *k-th* frequency $f_k$ of the sequence of $K$ frequencies $f_1, f_2, ..., f_K$, to process these electrical signals and to calculate for each *k-th* frequency $f_k$ the transmission efficiency coefficient $T_k$ of the transmission system **30** as described above, *mutatis mutandis.*

According to an embodiment, the comparing unit **24** is configured for receiving the transmission efficiency coefficient $T_k$ for each *k-th* frequency $f_k$ from the efficiency determination unit **22.** Then, the transmission efficiency coefficient $T_k$ is compared with the predetermined threshold value $X$. Further, the comparing unit **24** separates the electrical signals corresponding to the frequencies for which the transmission efficiency coefficient $T_k$ is less than the predetermined threshold value $X$ from the electrical signals corresponding to the frequencies for which the transmission efficiency coefficient $T_k$ is equal to or greater than the predetermined threshold value $X$. Then, the comparing unit **24** provides the electrical signals corresponding to the frequencies for which the transmission efficiency coefficient $T_k$ is equal to or greater than the predetermined threshold value $X$ to the steering system **13.** In turn, the electrical signals corresponding to the frequencies for which the transmission efficiency coefficient $T_k$ is less than the predetermined threshold value $X$ are relayed to the randomization unit **26.** The randomization unit **26** is configured for receiving the electrical signals corresponding to the frequencies for which the transmission efficiency coefficient $T_k$ is less than the predetermined threshold value $X$ from the comparing unit **24.** The randomization unit **26** is also configured for iteratively modifying the electrical signals, thereby generating randomized signals.

As described above, with reference to **Fig. 1,** the randomization unit **26** is configured for receiving electrical signals for the frequencies for which the transmission efficiency coefficient $T_k$ is less than the predetermined threshold value $X$, and for iteratively modifying these electrical signals by modifying their initial excitation vector $V_k^{init}$. In each iteration, the modification of each electrical signal is performed by randomizing the amplitude and phase of each electrical signal, thereby generating the randomized signals. More specifically, the modification of the electrical signals is performed by randomizing amplitude and phase of each vector element in the initial excitation vector $V_k^{init}$ of the electrical signals for each frequency at which the transmission efficiency coefficient $T_k$ is less than a predetermined threshold value $X$.

According to an embodiment, the randomization of the amplitude and phase of each vector element in the initial excitation vector $V_k^{init}$ is carried out by generating two random numbers $\alpha_1$ and $\alpha_2$, each in the interval [0, 1], and multiplying these two random numbers $\alpha_1$ and $\alpha_2$ by the initial amplitude $A_k$ and initial phase $\varphi_k$ correspondingly. As a result of multiplying the modified random number $\alpha_1$ and $\alpha_2$ by the initial amplitudes and initial phases of the electrical signals, randomized signals are obtained. Each randomized signal has a corresponding randomized phase $\varphi_{ran}$ and a randomized amplitude $A_{ran}$. It should be noted that for each *k*-th frequency, the two random numbers $\alpha_1$ and $\alpha_2$ can be different for each electrical signal in the *n*-th transmission channel ($n$ = 1, 2, ..., $N$). According to an embodiment, the randomized signals for the *k-th* frequency $f_k$ are represented by a randomized excitation vector $V_k^{ran}$ :

$$V_k^{ran} = \begin{pmatrix} A_{ran,1}e^{j\varphi_{ran,1}} \\ A_{ran,2}e^{j\varphi_{ran,2}} \\ A_{ran,3}e^{j\varphi_{ran,3}} \\ \vdots \\ A_{ran,N}e^{j\varphi_{ran,N}} \end{pmatrix}_k ,$$

The randomization unit **26** is also configured for providing, in each iteration, the randomized excitation vectors to the efficiency determination unit **22** for calculating an updated transmission efficiency coefficient $T_{ran,k}$.

According to this embodiment, this updated transmission efficiency coefficient $T_{ran,k}$ is relayed by the efficiency determination unit **22** to the optimal efficiency determination system **310** in each iteration of the modification system **31.**

According to an embodiment, the optimal efficiency determination system **310** is configured for receiving in each iteration of the modification system **31** the electrical signals for which the transmission efficiency coefficient $T_k$ is less than the predetermined threshold value $X$ from the comparing unit **24.** The optimal efficiency determination system **310** also receives the two random numbers $\alpha_1$ and $\alpha_2$ for each transmission channel from the randomization unit **26** and the corresponding updated transmission efficiency coefficient $T_{ran,k}$ for the randomized signals from the efficiency determination unit **22.**

According to an embodiment, the optimal efficiency determination system **310** includes a modification unit **311,** an efficiency determination sub-unit **312** arranged downstream of the modification unit **311,** a comparing sub-unit **314** arranged downstream of the efficiency determination sub-unit **312,** and a storing unit **313** coupled to the comparing sub-unit **314.**

According to an embodiment, the modification unit **311** is configured, in each sub-iteration $p$ (where $p$ is sub-iteration number $p$ = 1, 2, ..., P), for receiving the electrical signals for which the transmission efficiency coefficient $T_k$ is less

than the predetermined threshold value $X$ from the comparing unit **24** and the corresponding two random numbers $\alpha_1$ and $\alpha_2$ for each electrical signal from the randomization unit **26,** and for modifying these electrical signals, thereby generating modified randomized signals.

According to an embodiment, the modification of these electrical signals is carried out by modifying the initial amplitudes and initial phases of these electrical signals. More specifically, the modification of these electrical signals is performed by modifying the initial amplitude and initial phase of each vector element in the initial excitation vector $V_k^{init}$ of these electrical signals.

According to an embodiment, the modification of the amplitudes and phases of the electrical signals is carried out by multiplying the initial amplitude and initial phase of each electrical signal by the corresponding two modified random numbers $\alpha_{2mod}$ and $\alpha_{2mod}$.

According to an embodiment, the two modified random numbers $\alpha_{2mod}$ and $\alpha_{2mod}$ are the numbers in the proximity of the two random numbers $\alpha_1$ and $\alpha_2$. The two modified random numbers $\alpha_{2mod}$ and $\alpha_{2mod}$ are generated by sub-iteratively modifying the values of the two random numbers $\alpha_1$ and $\alpha_2$ (i.e., modifying the two random numbers $\alpha_1$ and $\alpha_2$ in each sub-iteration $p$).

According to an embodiment, modification of the two random numbers $\alpha_1$ and $\alpha_2$ is carried out by sub-iteratively adding $\pm\Delta\beta_1 \cdot p$ and $\pm\Delta\beta_2 \cdot p$ ($p$ = 1, 2, ..., $P$) to the two random numbers $\alpha_1$ and $\alpha_2$, correspondingly. The proximity increments $\Delta\beta_1$ and $\Delta\beta_2$ can, for example, be in the range of 0.01- 0.001. Accordingly, in each sub-iteration $p$, $\alpha_{1mod,p} = \alpha_1 \pm \Delta\beta_1 \cdot p$ and $\alpha_{2mod,p} = \alpha_2 \pm \Delta\beta_2 . p$. The number of sub-iterations $P$ can, for example, be in the range of 500-1000.

For example, when in the first sub-iteration ($p = 1$) $\Delta\beta_1$ = 0.001 and $\Delta\beta_2$ = 0.003, the two modified random numbers can be $\alpha_{1mod,1} = \alpha_1 + 0.001 \cdot 1$ and $\alpha_{2mod,1} = \alpha_2 + 0{,}003 \cdot 1$. Accordingly, in the second sub-iteration ($p = 2$) $\alpha_{1mod,2} = \alpha_1 + 0.001 \cdot 2$ and $\alpha_{2mod,2} = \alpha_2 + 0{,}003 \cdot 2$.

As a result of multiplying the two modified random numbers $\alpha_{2mod}$ and $\alpha_{2mod}$ by the initial amplitudes and initial phases of the electrical signals, modified randomized signals are obtained. As a result of the modification sub-iterative procedure, for each transmission channel $n$ (where $n$ = 1, 2, ..., $N$), each modified randomized signal has a corresponding modified randomized phase $(\varphi_{mod})_p$ and a modified randomized amplitude $(A_{mod})_p$.

According to an embodiment, in each sub-iteration $p$, the modified randomized signals for the $k$-$th$ frequency $f_k$ are represented by a modified excitation vector $V_k^{mod}$:

$$V_k^{mod} = \begin{pmatrix} A_{mod,1} e^{j\varphi_{mod,1}} \\ A_{mod,2} e^{j\varphi_{mod,2}} \\ A_{mod,3} e^{j\varphi_{mod,3}} \\ \vdots \\ A_{mod,N} e^{j\varphi_{mod,N}} \end{pmatrix}_k ,$$

The modification unit **311** is also configured for relaying these modified randomized signals to the sub efficiency determination unit **312** in each sub-iteration $p$.

According to an embodiment, in each sub-iteration $p$, the efficiency determination sub-unit **312** is configured for receiving the modified randomized signals from the modification unit **311,** and for calculating the transmission efficiency coefficient $T_{mod,k}$ for these modified randomized signals as described above, *mutatis mutandis.*

Thus, in each sub-iteration of the optimal efficiency determination system **310** the electrical signals are modified and transmission efficiency coefficient $T_{mod,k}$ is calculated for the modified randomized signals, as described above.

According to an embodiment, the storing unit **313** is configured for storing the transmission efficiency coefficient $T_{mod,k}$ and the corresponding excitation vector $V_k^{mod}$ of the modified randomized signals received from the efficiency determination sub-unit **312,** and the transmission efficiency coefficient $T_{ran,k}$ of the randomized signals, and the corresponding randomized vector $V_k^{ran}$ obtained from the efficiency determination unit **22.**

The transmission efficiency coefficient $T_{ran,k}$ (or $T_{mod,k}$) stored in the storing unit **313** is referred to herein as "stored efficiency coefficient", and the corresponding excitation vector $V_k^{ran}$ (or $V_k^{mod}$) is referred to herein as "stored excitation vector".

In operation, for each sub-iteration $p$, the comparing sub-unit **314** is configured for receiving the stored coefficient from the storing unit **313** and the transmission efficiency coefficient $T_{mod,k}$ of the modified randomized signals from the efficiency determination sub-unit **312.** The comparing sub-unit **314** is also configured for comparing the value of the stored efficiency coefficient with the current value of the transmission efficiency coefficient $T_{mod,k}$ of the modified randomized signals. The comparing sub-unit **314** is also configured for providing the transmission efficiency coefficient $T_{mod,k}$ of the

modified randomized signals and the corresponding excitation vector $V_k^{mod}$ to the storing unit **313** for storing thereof when in a certain sub-iteration *p* the value of this transmission efficiency coefficient $T_{mod,k}$ is greater than the value of stored efficiency coefficient.

More specifically, the stored efficiency coefficient and the stored excitation vector in the storing unit **313** are replaced with the transmission efficiency coefficient $T_{mod,k}$ and the corresponding excitation vector $V_k^{mod}$ when the value of this transmission efficiency coefficient $T_{mod,k}$ is greater than the value of the stored efficiency coefficient. Alternatively, when the value of this transmission efficiency coefficient $T_{mod,k}$ is equal to or less than the value of the stored efficiency coefficient, the stored efficiency coefficient remains unchanged.

It should be understood that in the first sub-iteration ($p$ = 1), the storing unit **313** receives the transmission efficiency coefficient $T_{ran,k}$ of the randomized signals and the corresponding excitation vector $V_k^{ran}$ for storing. In other words, the stored efficiency coefficient in the first sub-iteration is the transmission efficiency coefficient $T_{ran,k}$ of the randomized signals and the stored excitation vector is the corresponding excitation vector $V_k^{ran}$.

Accordingly, in the first sub-iteration, the comparing sub-unit **314** compares the value of the transmission efficiency coefficient $T_{ran,k}$ of the randomized signals with the value of the transmission efficiency coefficient $T_{mod,k}$ of the modified randomized signals.

This process is performed in each sub-iteration *p* of the optimal efficiency determination system **310.** After completing the predetermined number *P* of sub-iterations, the storing unit **313** stores the highest value of the transmission efficiency coefficient $T_{ran,k}$ (or $T_{mod,k}$) from all the sub-iterations *P* and the excitation vector $V_k^{mod}$ (or $V_k^{ran}$) corresponding to this highest value of the transmission efficiency coefficient.

The stored efficiency coefficient. which is stored in the storing unit **313** after completing the predetermined number *P* of sub-iterations, is referred to herein as "highest transmission efficiency coefficient $T_h$", while the corresponding excitation vector is referred to herein as "optimal excitation vector $V_k^h$".

After completing the predetermined number *P* of sub-iterations, the storing unit **313** is also configured for providing the highest transmission efficiency coefficient $T_h$ to the comparing unit **24** for comparing this highest transmission efficiency coefficient $T_h$ with the predetermined threshold value *X*. The optimal excitation vector $V_k^h$, for which the highest transmission efficiency coefficient $T_h$ is equal to or greater than the predetermined threshold value *X*, represents the optimal modified signals.

The comparing unit **24** is also configured for relaying optimal electrical signals including the optimal modified signals and the optimal unmodified signals to the steering system **13.**

In turn, when the highest transmission efficiency coefficient $T_h$ is less than the predetermined threshold value *X*, the modification system **31** continues its operation and performs a further iteration.

According to an embodiment, the steering system **13** is configured for receiving the optimal electrical signals obtained from the modification system **31,** and for generating steering electrical signals related to the optimal electrical signals.

The steering electrical signals are provided to the antenna array **14** via the *N* transmission channels to form a steered beam for transmission in the predetermined direction.

Referring to **Fig. 4,** a flow chart diagram of a method **40** for transmitting radio frequency (RF) radiation in a predetermined direction at a sequence of *K* frequencies within a predetermined frequency band by using the transmission system **30** in **Fig. 3** is illustrated, according to an embodiment of the present invention. The method **40** of operation of the transmission system **30** differs from the method *(***20** in **Fig. 2**) of operation of the transmission system **10** in the fact that it further includes a step of obtaining, by the optimal efficiency determination system **310,** modified randomized signals for which the transmission efficiency coefficient $T_{mod,k}$ is greater than the transmission efficiency coefficient $T_{ran,k}$ of the randomized signals.

Referring to **Fig. 5,** a flow chart diagram of a method **50** for providing the modified randomized signals for which the transmission efficiency coefficient $T_{mod,k}$ is greater than the transmission efficiency coefficient $T_{ran,k}$ of the randomized signals by the optimal efficiency determination system **310 in Fig. 3** is illustrated, according to an embodiment of the present invention.

According to this embodiment, the method **50** includes receiving and storing (block **51**) the transmission efficiency coefficient $T_{ran,k}$ of the randomized signals and the corresponding randomized vector $V_k^{ran}$. The method further includes sub-iteratively modifying (block **52**) the electrical signals for which the transmission efficiency coefficient is less than the predetermined threshold value *X* obtained from the RF generator **11.** The modification of these electrical signals is carried out by modifying the initial amplitudes and initial phases of these electrical signals in each sub-iteration.

More specifically, the modification of these electrical signals is performed by modifying amplitude and phase of

each vector element in the initial excitation vector $V_k^{init}$ of these electrical signals in each sub-iteration. The modification of the amplitudes and phases of the electrical signals is carried out by multiplying the initial amplitude and initial phase of each electrical signal by the corresponding two modified random numbers $\alpha_{2mod}$ and $\alpha_{2mod}$. The two modified random numbers $\alpha_{2mod}$ and $\alpha_{2mod}$ are the numbers in the proximity of the two random numbers $\alpha_1$ and $\alpha_2$.

According to an embodiment, the two modified random numbers $\alpha_{2mod}$ and $\alpha_{2mod}$ are generated by sub-iteratively modifying the values of the two random numbers $\alpha_1$ and $\alpha_2$ (i.e., modifying the random numbers $\alpha_1$ and $\alpha_2$ in each sub-iteration).

According to an embodiment, the modification of the two random numbers $\alpha_1$ and $\alpha_2$ is carried out by sub-iteratively adding $\pm\Delta\beta_1 \cdot p$ and $\pm\Delta\beta_2 \cdot p$ to the two random numbers $\alpha_1$ and $\alpha_2$, correspondingly, where *p* = 1, 2, ..., *P*, where *P* is the total number of sub-iterations. The proximity increments $\Delta\beta_1$ and $\Delta\beta_2$ can, for example, be in the range of 0.01-0.001. Accordingly, in each sub-iteration *p*, $\alpha_{1mod,p} = \alpha_1 \pm \Delta\beta_1 \cdot p$ and $\alpha_{2mod,p} = \alpha_2 \pm \Delta\beta_2 \cdot p$. The number of the sub-iterations *P* can, for example, be in the range of 500-1000.

For example, when in the first sub-iteration (*p = 1*) $\Delta\beta_1$ = 0.001 and $\Delta\beta_2$ = 0.003, the modified two random numbers can be $\alpha_{1mod,1} = \alpha_1 + 0.001 \cdot 1$ and $\alpha_{2mod,1} = \alpha_2 + 0.003 \cdot 1$. Accordingly, in the second sub-iteration (*p* = 2) $a_{1mod,2} = \alpha_1 + 0.001 \cdot 2$ and $\alpha_{2mod,2} = \alpha_2 + 0,003 \cdot 2$.

As a result of multiplying the two modified random numbers $\alpha_{2mod}$ and $\alpha_{2mod}$ by the initial amplitudes and initial phases of the electrical signals, modified randomized signals are obtained. As a result of the modification sub-iterative procedure, in each sub iteration *p,* for each transmission channel *n* (*n* = 1, 2, ..., *N*), each modified randomized signal has a corresponding modified randomized phase $(\varphi_{mod})_p$ and a modified randomized amplitude $(A_{mod})_p$. The modified randomized signals for the *k-th* frequency $f_k$ can be represented by a modified excitation vector $V_k^{mod}$ :

$$V_k^{mod} = \begin{pmatrix} A_{mod,1}e^{j\varphi_{mod,1}} \\ A_{mod,2}e^{j\varphi_{mod,2}} \\ A_{mod,3}e^{j\varphi_{mod,3}} \\ \vdots \\ A_{mod,N}e^{j\varphi_{mod,N}} \end{pmatrix}_k$$

As shown in **Fig. 5,** the method also includes calculating (block **53**) the transmission efficiency coefficient $T_{mod,k}$ for these modified randomized signals in each sub-iteration. The transmission efficiency coefficient $T_{mod,k}$ is calculated by using equations (1), (3) and (4), *mutatis mutandis.*

As also shown in **Fig. 5,** the method also includes comparing (block **54**) the transmission efficiency coefficient $T_{mod,k}$ for the modified randomized signals obtained in the previous step (block **53**) with the previously stored transmission efficiency coefficient in each sub-iteration and replacing (block **55**) the previously stored transmission efficiency coefficient with the transmission efficiency coefficient $T_{mod,k}$ for the modified randomized signals when this transmission efficiency coefficient $T_{mod,k}$ is greater than the previously stored transmission efficiency coefficient.

In turn, when this transmission efficiency coefficient $T_{mod,k}$ is less than the previously stored transmission efficiency coefficient, the previously stored transmission efficiency coefficient remains unchanged (block **56**).

The stored efficiency coefficient obtained after completing the predetermined number *P* of the sub-iterations is referred to herein as "highest transmission efficiency coefficient $T_h$" and the corresponding excitation vector is referred to herein as "optimal excitation vector $V_k^h$ ". It should be understood that optimal transmission efficiency coefficient $T_h$ is the maximal transmission efficiency coefficient obtained during the *P* sub-iterations. The optimal excitation vector $V_k^h$ , represents the modified randomized signals for which the transmission efficiency coefficient $T_{mod,k}$ is greater than the transmission efficiency coefficient $T_{ran,k}$ of the randomized signals.

Turning back to **Fig. 4,** after completing the predetermined number *P* of sub-iterations in the method **50** described above, the method **40** further includes comparing the highest transmission efficiency coefficient $T_h$ obtained in the method **50** with the predetermined threshold value *X* in each iteration of the modification system **31.** Modified randomized signals for which the highest transmission efficiency coefficient $T_h$ is greater than the predetermined threshold value *X* are the optimal modified signals.

According to an embodiment, the method **40** of operation of the transmission system **30** also includes relaying (block **105**) the optimal electrical signals including the modified randomized signals from the optimal efficiency determination system **310** (in **Fig. 3**) and the optimal unmodified signals obtained from the RF signal generator **11** for which the transmission efficiency coefficients are equal to or greater than the predetermined threshold value *X* to the steering system **13.**

In turn, when optimal transmission efficiency coefficient $T_{opt}$ for the optimal electrical signals is less than the

predetermined threshold value *X*, a further iteration is performed by the modification system **31.** The iterative modification is performed by the modification system **31** until the optimal transmission efficiency coefficient $T_{opt}$ for the modified randomized signals is equal to or greater than the predetermined threshold value *X*.

Referring to **Fig. 6,** examples of the frequency dependence (curve **61**) of the transmitted energy of the transmission system **30** shown in **Fig. 3** and the frequency dependence (curve **62**) of the transmitted energy of a conventional system, which does not include the modification system **31,** are illustrated. As mentioned above, null points occur at the frequencies at which the amount of the transmitted energy is less than a certain predetermined threshold value. For example, this threshold value can be in the range of 70%-90%.

As can be seen in **Fig. 6,** several null points appear on a curve **62** at the frequencies below 2.5 GHz. For example, a point **63** at frequency 2.1 GHz is a null point, since the transmitted energy corresponding to this point is less than 40%. As can also be seen, adding the modification system **31** to a conventional system, can modify the transmitted energy characteristics. In particular, the transmitted energy is enhanced at the null points, which occur at the frequency range below 2.5 GHz. For example, at a point **64** on a curve **61** (which corresponds to the same frequency 2.1 GHz as the point **63** on curve **62**) the transmitted energy is greater than 70%.

Thus, the implementation of the modification system **31** in a conventional system significantly extends the operation frequency band of the conventional system.

**Fig. 7A** illustrates a radiation azimuth pattern 71 generated by the transmission system **30** shown in **Fig. 3** at the frequency of 2.0269 GHz, and a radiation azimuth pattern **72** generated by a conventional system which does not include the modification system **31** at that same frequency.

As can be seen, the adding of the modification system **31** to the conventional system improves transmission characteristics in terms of both the gain and the directivity of transmission.

The improved transmission characteristics can also be observed in a broad frequency range. For example, **Fig. 7B** illustrates a radiation azimuth pattern **73** generated by the transmission system **30** shown in **Fig. 3** at the frequency of 1.6725 GHz, and a radiation azimuth pattern **74** generated by a conventional system which does not include the modification system **31** at that same frequency.

As such, those skilled in the art to which the present invention pertains, can appreciate that while the present invention has been described in terms of preferred embodiments, the concept upon which this disclosure is based may readily be utilized as a basis for the designing of other structures, systems and processes for carrying out the several purposes of the present invention.

Also, it is to be understood that the phraseology and terminology employed herein are for the purpose of description and should not be regarded as limiting.

Finally, it should be noted that the word "comprising" as used throughout the appended claims is to be interpreted to mean "including but not limited to".

It is important, therefore, that the scope of the invention is not construed as being limited by the illustrative embodiments set forth herein. Other variations are possible within the scope of the present invention as defined in the appended claims.

## Claims

**1.** A transmission system (10) for transmitting radio frequency (RF) radiation in a predetermined direction at a sequence of *K* frequencies by an antenna array (14) comprising a predetermined number *N* of antenna elements, comprising:

an RF signal generator (11) configured for generating electrical signals having an initial amplitude and an initial phase through *N* transmission channels corresponding to *N* antenna elements, at the sequence of *K* frequencies;

a modification system (12) arranged downstream of the RF signal generator (11), configured for receiving and processing the electrical signals from said RF signal generator (11) for obtaining optimal electrical signals for which a transmission efficiency coefficient of the transmission system is equal to or greater than a predetermined threshold value, the optimal electrical signals including optimal unmodified signals provided by the RF signal generator (11) and optimal modified signals generated by the modification system (12); and

a steering system (13) arranged downstream of said modification system (12) and coupled to said antenna array (14), and configured for (i) receiving the optimal electrical signals obtained from the modification system (12), (ii) generating steering electrical signals related to the optimal electrical signals and (iii) relaying the steering electrical signals via the *N* transmission channels to the antenna array (14) to form a steered beam for transmission in the predetermined direction;

wherein the modification system (12) comprises:

an efficiency determination unit (22) configured for receiving the electrical signals at the sequence of *K*

frequencies from the RF signal generator (11) and for calculating the transmission efficiency coefficient of the transmission system for each *k-th* frequency $f_k$;
a comparing unit (24) configured for

receiving the transmission efficiency coefficient for each *k-th* frequency $f_k$ from the efficiency determination unit (22),
comparing the transmission efficiency coefficient with the predetermined threshold value,
separating electrical signals corresponding to the frequencies for which the transmission efficiency coefficient is less than the predetermined threshold value from the electrical signals corresponding to the frequencies for which the transmission efficiency coefficient is equal to or greater than the predetermined threshold value, and
providing the electrical signals corresponding to the frequencies for which the transmission efficiency coefficient is equal to or greater than the predetermined threshold value to the steering system (13); and
a randomization unit (26) configured for
receiving the electrical signals corresponding to the frequencies for which the transmission efficiency coefficient is less than the predetermined threshold value,
iteratively modifying these electrical signals by randomizing amplitude and phase of these electrical signals, thereby generating randomized signals, each randomized signal having a corresponding randomized amplitude and randomized phase, and
providing in each iteration said randomized signals to the efficiency determination unit (22) to calculate transmission efficiency coefficient for said randomized signals,
wherein the optimal modified signals are the randomized signals for which the transmission efficiency coefficient is equal to or greater than the predetermined threshold value and the optimal unmodified signals are electrical signals having said initial amplitude and said initial phase for which the transmission efficiency coefficient is equal to or greater than the predetermined threshold value.

**2.** The transmission system of claim 1 , wherein the randomization system (12) is configured for performing iterative modification of the electrical signals corresponding to the frequencies for which the transmission efficiency coefficient is less than the predetermined threshold value until the transmission efficiency coefficient for these electrical signals is equal to or greater than said predetermined threshold value.

**3.** The transmission system of any one of claims 1 to 2, wherein the transmission efficiency coefficient is calculated by:

$$T_k = \frac{E_{trans}}{E_{total}} \cdot 100\% ,$$

where $E_{total}$ is the total energy of the electrical signals for the *k-th* frequency $f_k$ generated by the RF signal generator and $E_{trans}$ is the energy transmitted in operation for the *k-th* frequency $f_k$ and where $E_{trans}$ is calculated by the efficiency determination unit (22) by $E_{trans} = E_{total} - E_{lost}$ , where $E_{lost}$ is the energy that is lost by the transmission system in operation for the *k-th* frequency $f_k$;

wherein the lost energy $E_{lost}$ is calculated by:

$$E_{lost} = \sum_{n=1}^{N} |\widetilde{s}|_n \quad ,$$

where $\widetilde{s_n}$ is a combined energy that an *n-th* antenna element (n = *1,* 2, ..., *N*) in the antenna array (14) receives from neighboring antenna elements and a self-reflected energy of the *n-th* antenna element;wherein said combined energy $\widetilde{s_n}$ is calculated by:

$$\begin{pmatrix} \widetilde{S_1} \\ \widetilde{S_2} \\ \widetilde{S_3} \\ \vdots \\ \widetilde{S_N} \end{pmatrix} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix} \cdot \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix},$$

where $V_k^{init} = \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}$ is an initial excitation vector representing the electrical signals for *N* transmission channels for each *k-th* frequency $f_k$, and $\underset{\sim}{S} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix}$ is a coupling matrix characterizing mutual coupling between antenna elements and a self-reflected energy of the antenna elements in the antenna array (14); and

wherein the transmitted energy $E_{trans}$ of the transmission system is calculated by:

$$E_{trans} = E_{total} - E_{lost} = \sum_{n=1}^{N} |A_n e^{j\varphi_n}| - \sum_{n=1}^{N} \widetilde{|S|}_n \quad .$$

4. The transmission system of claim 1, wherein randomizing the amplitude and the phase of the electrical signals is carried out by iteratively generating two random numbers, each in the interval [0, 1], and multiplying the initial amplitude and the initial phase of said electrical signals by the two random numbers, correspondingly; thereby generating said randomized signals.

5. The transmission system of any one of claims 1 to 4, wherein the randomization system (12) further includes an optimal efficiency determination system (310) arranged downstream of the randomization unit (26) and coupled to the comparing unit (24) and to the efficiency determination unit (22), said optimal efficiency determination system (310) is configured for sub-iteratively modifying said two random numbers thereby, generating in each sub-iteration two modified random numbers, and generating modified randomized signals for which the transmission efficiency coefficient is greater than the transmission efficiency coefficient of the randomized signals by using said two modified random numbers.

6. The transmission system of claim 5, wherein the optimal efficiency determination system (310) comprises:

a modification unit (311) configured for (i) receiving the electrical signals for which the transmission efficiency coefficient is less than the predetermined threshold value from the comparing unit (24) and (ii) receiving the corresponding two random numbers for each electrical signal from the randomization unit (26) and (iii) sub-iteratively modifying said electrical signals, thereby generating said modified randomized signals;

an efficiency determination sub-unit (312) arranged downstream of the modification unit (311) configured for sub-iteratively receiving the modified randomized signals from the modification unit (311) and calculating a transmission efficiency coefficient for these modified randomized signals;

a storing unit (314) configured for storing the transmission efficiency coefficient for the modified randomized signals and a corresponding excitation vector sub-iteratively received from the efficiency determination sub-unit (312), and storing the transmission efficiency coefficient for the randomized signals, and a corresponding randomized vector iteratively obtained from the efficiency determination unit; and

a comparing sub-unit (313) coupled to the storing unit (314) configured for

sub-iteratively receiving a stored efficiency coefficient from the storing unit (314) and the transmission efficiency coefficient for the modified randomized signals from the efficiency determination sub-unit (312),

sub-iteratively comparing the stored efficiency coefficient with the transmission efficiency coefficient of the modified randomized signals, and
providing the transmission efficiency coefficient for the modified randomized signals and the corresponding excitation vector to the storing unit (314) for storing thereof when the value of this transmission efficiency coefficient for the modified randomized signals is greater than the value of said stored efficiency coefficient.

**7.** A method for transmitting radio frequency (RF) radiation in a predetermined direction at a sequence of *K* frequencies by an antenna array (14) comprising a predetermined number *N* of antenna elements, comprising:

generating electrical signals having an initial amplitude and an initial phase at a sequence of *K* frequencies;
processing the electrical signals and obtaining optimal electrical signals for which the transmission efficiency coefficient is equal to or greater than a predetermined threshold value, the optimal electrical signals including optimal unmodified signals and optimal modified signals;
generating steering electrical signals related to the optimal electrical signals; and
forming a steered beam based on the steering electrical signals for transmission in the predetermined direction;
wherein the obtaining of the optimal electrical signals comprises:

calculating a transmission efficiency coefficient for each *k-th* frequency $f_k$ of the sequence of *K* frequencies;
comparing the transmission efficiency coefficient for each *k-th* frequency $f_k$ with a predetermined threshold value;
separating electrical signals corresponding to the frequencies for which the transmission efficiency coefficient is less than the predetermined threshold value from the electrical signals corresponding to the frequencies for which the transmission efficiency coefficient is equal to or greater than the predetermined threshold value;
iteratively modifying the electrical signals corresponding to the frequencies for which the transmission efficiency coefficient is less than the predetermined threshold value by randomizing amplitude and phase of these electrical signals, thereby generating randomized signals; and
providing optimal electrical signals including optimal unmodified signals and optimal modified signals, wherein the optimal modified signals are the randomized signals for which the transmission efficiency coefficient is equal to or greater than the predetermined threshold value, and the optimal unmodified signals are the electrical signals having said initial amplitude and said initial phase for which the transmission efficiency coefficient is equal to or greater than the predetermined threshold value.

**8.** The method of claim 7, wherein the iterative modifying of the electrical signals corresponding to the frequencies for which the transmission efficiency coefficient is less than the predetermined threshold value, is performed until the transmission efficiency coefficient for these electrical signals is equal to or greater than said predetermined threshold value thereby generating the optimal modified signals.

**9.** The method of claim 7, wherein the transmission efficiency coefficient is calculated by:

$$T_k = \frac{E_{trans}}{E_{total}} \cdot 100\% \quad ,$$

where $E_{total}$ is the total energy of the electrical signals for the *k-th* frequency $f_k$, $E_{trans}$ is the energy transmitted in operation for the *k-th* frequency $f_k$ and where $E_{trans}$ is calculated by $E_{trans} = E_{total} - E_{lost}$, where $E_{lost}$ is the energy that is lost in operation for the *k-th* frequency $f_k$.

**10.** The method of claim 9, wherein the lost energy $E_{lost}$ is calculated by:

$$E_{lost} = \sum_{n=1}^{N} |\widetilde{s}|_n$$

where $\widetilde{s_n}$ is a combined energy that an *n-th* antenna element in the antenna array (14) receives from neighboring antenna elements and a self-reflected energy of the *n-th* antenna element;

wherein said combined energy $\widetilde{s_n}$ is calculated by:

$$\begin{pmatrix} \widetilde{s_1} \\ \widetilde{s_2} \\ \widetilde{s_3} \\ \vdots \\ \widetilde{s_N} \end{pmatrix} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix} \cdot \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix},$$

where $V_k^{init} = \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}$ is an initial excitation vector representing the electrical signals for *N* transmission channels for each *k-th* frequency $f_k$ and $S = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix}$ is a coupling matrix characterizing mutual coupling between antenna elements and the self-reflected energy of the antenna elements in the antenna array (14); and

wherein the transmitted energy $E_{trans}$ of the transmission system is calculated by:

$$E_{trans} = E_{total} - E_{lost} = \sum_{n=1}^{N} |A_n e^{j\varphi_n}| - \sum_{n=1}^{N} \widetilde{|s|}_n$$

**11.** The method of claim 7, wherein randomizing the amplitude and the phase of the electrical signals is carried out by generating two random numbers, each in the interval [0, 1], and multiplying the initial amplitude and the initial phase of said electrical signals by the two random numbers, correspondingly.

## Patentansprüche

**1.** Übertragungssystem (10) zum Übertragen von Hochfrequenzstrahlung (HF-Strahlung) in einer vorbestimmten Richtung bei einer Sequenz von *K* Frequenzen durch ein Antennen-Array (14), das eine vorbestimmte Anzahl *N* von Antennenelementen umfasst, das Folgendes umfasst:

einen HF-Signalgenerator (11), der dazu konfiguriert ist, elektrische Signale zu erzeugen, die eine anfängliche Amplitude und eine anfängliche Phase durch *N* Übertragungskanäle aufweisen, die *N* Antennenelementen bei der Sequenz von *K* Frequenzen entsprechen;

ein Modifikationssystem (12), das stromabwärts des HF-Signalgenerators (11) eingerichtet ist, das dazu konfiguriert ist, die elektrischen Signale von dem HF-Signalgenerator (11) zu empfangen und zu verarbeiten, um optimale elektrische Signale zu gewinnen, für die ein Übertragungseffizienzkoeffizient des Übertragungssystems gleich oder größer ist als ein vorbestimmter Schwellenwert, wobei die optimalen elektrischen Signale optimale unmodifizierte Signale einschließen, die von dem HF-Signalgenerator (11) bereitgestellt werden, und optimale modifizierte Signale, die von dem Modifikationssystem (12) erzeugt werden; und

ein Lenksystem (13), das stromabwärts des Modifikationssystems (12) eingerichtet und mit dem Antennen-Array (14) gekoppelt und dazu konfiguriert ist, (i) die optimalen elektrischen Signale zu empfangen, die von dem Modifikationssystem (12) gewonnen werden, (ii) elektrische Lenksignale zu erzeugen, die die optimalen elektrischen Signale betreffen und (iii) die elektrischen Lenksignale über die *N* Übertragungskanäle an das Antennen-Array (14) weiterzugeben, um einen gelenkten Strahl zur Übertragung in der vorbestimmten Richtung zu bilden;

wobei das Modifikationssystem (12) Folgendes umfasst:

eine Effizienzbestimmungseinheit (22) die dazu konfiguriert ist, die elektrischen Signale bei der Sequenz von $K$ Frequenzen von dem HF-Signalgenerator (11) zu empfangen, und den Übertragungseffizienzkoeffizienten des Übertragungssystems für jede $k$-te Frequenz $f_k$ zu berechnen;
eine Vergleichseinheit (24), die konfiguriert ist zum:

Empfangen des Übertragungseffizienzkoeffizienten für jede *k-te* Frequenz $f_k$ von der Effizienzbestimmungseinheit (22),
Vergleichen des Übertragungseffizienzkoeffizienten mit dem vorbestimmten Schwellenwert,
Trennen elektrischer Signale, die den Frequenzen entsprechen, für die der Übertragungseffizienzkoeffizient kleiner ist als der vorbestimmte Schwellenwert von den elektrischen Signalen, die den Frequenzen entsprechen, für die der Übertragungseffizienzkoeffizient gleich oder größer ist als der vorbestimmte Schwellenwert, und
Bereitstellen der elektrischen Signale, die den Frequenzen entsprechen, für die der Übertragungseffizienzkoeffizient gleich oder größer ist als der vorbestimmte Schwellenwert an das Lenksystem (13); und
eine Randomisierungseinheit (26), die konfiguriert ist zum
Empfangen der elektrischen Signale, die den Frequenzen entsprechen, für die der Übertragungseffizienzkoeffizient kleiner ist als der vorbestimmte Schwellenwert,
iterativen Modifizieren dieser elektrischen Signale durch Randomisieren der Amplitude und Phase dieser elektrischen Signale, wodurch randomisierte Signale erzeugt werden, wobei jedes randomisierte Signal eine entsprechende randomisierte Amplitude und randomisierte Phase aufweist, und
Bereitstellen in jeder Iteration der randomisierten Signale an die Effizienzbestimmungseinheit (22) zum Berechnen des Übertragungseffizienzkoeffizienten für die randomisierten Signale, wobei die optimalen modifizierten Signale die randomisierten Signale sind, für die der Übertragungseffizienzkoeffizient gleich oder größer ist als der vorbestimmte Schwellenwert, und die optimalen unmodifizierten Signale elektrische Signale sind, die die anfängliche Amplitude und die anfängliche Phase aufweisen, für die der Übertragungseffizienzkoeffizient gleich oder größer als der vorbestimmte Schwellenwert ist.

**2.** Übertragungssystem nach Anspruch 1, wobei das Randomisierungssystem (12) zum Durchführen iterativer Modifikation der elektrischen Signale konfiguriert ist, die den Frequenzen entsprechen, für die der Übertragungseffizienzkoeffizient kleiner ist als der vorbestimmte Schwellenwert, bis der Übertragungseffizienzkoeffizient für diese elektrischen Signale gleich oder größer ist als der vorbestimmte Schwellenwert.

**3.** Übertragungssystem nach einem der Ansprüche 1 bis 2, wobei der Übertragungseffizienzkoeffizient berechnet wird durch:

$$T_k = \frac{E_{trans}}{E_{total}} \cdot 100\% ,$$

wobei $E_{total}$ die Gesamtenergie der elektrischen Signale für die *k-te* Frequenz $f_k$ ist, die von dem HF-Signalgenerator erzeugt wird, und $E_{trans}$ die Energie ist, die beim Betrieb für die *k-te* Frequenz $f_k$ übertragen wird, und wobei $E_{trans}$ von der Effizienzbestimmungseinheit (22) berechnet wird durch $E_{trans} = E_{total} - E_{lost}$, wobei $E_{lost}$ die Energie ist, die von dem Übertragungssystem beim Betrieb für die *k-te* Frequenz $f_k$ verloren geht;

wobei die Verlustenergie $E_{lost}$ berechnet wird durch:

$$E_{lost} = \sum_{n=1}^{N} \widetilde{|s|}_n \quad ,$$

wobei $\widetilde{s_n}$ eine kombinierte Energie ist, die ein *n-tes* Antennenelement ($n$ = 1, 2, ..., $N$) in dem Antennen-Array (14) von benachbarten Antennenelementen empfängt, und einer selbstreflektierten Energie des *n-ten* Antennenelements ist; wobei die kombinierte Energie $\widetilde{s_n}$ berechnet wird durch:

$$\begin{pmatrix} \widetilde{s_1} \\ \widetilde{s_2} \\ \widetilde{s_3} \\ \vdots \\ \widetilde{s_N} \end{pmatrix} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix} \cdot \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix},$$

wobei $V_k^{init} = \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix},$ ein anfänglicher Erregungsvektor ist, der die elektrischen Signale für *N* Übertragungskanäle für jede *k-te* Frequenz $f_k$ darstellt, und $S = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix}$ eine Kopplungsmatrix ist, die gegenseitiges Koppeln von Antennenelementen und einer selbstreflektierten Energie der Antennenelemente in dem Antennen-Array (14) charakterisiert; und

wobei die übertragene Energie $E_{trans}$ des Übertragungssystems berechnet wird durch:

$$E_{trans} = E_{total} - E_{lost} = \sum_{n=1}^{N} |A_n e^{j\varphi_n}| - \sum_{n=1}^{N} \widetilde{|s|}_n \; .$$

4. Übertragungssystem nach Anspruch 1, wobei das Randomisieren der Amplitude und der Phase der elektrischen Signale durch iteratives Erzeugen zweier Zufallszahlen jeweils in dem Intervall [0, 1] durchgeführt wird, und entsprechendes Multiplizieren der anfänglichen Amplitude und der anfänglichen Phase der elektrischen Signale mit den zwei Zufallszahlen; wodurch die randomisierten Signale erzeugt werden.

5. Übertragungssystem nach einem der Ansprüche 1 bis 4, wobei das Randomisierungssystem (12) ferner ein Bestimmungssystem (310) einer optimalen Effizienz beinhaltet, das stromabwärts der Randomisierungseinheit (26) eingerichtet ist und mit der Vergleichseinheit (24) und der Effizienzbestimmungseinheit (22) gekoppelt ist, wobei das Bestimmungssystem (310) einer optimalen Effizienz dazu konfiguriert ist, subiterativ die zwei Zufallszahlen zu modifizieren, wodurch in jeder Subiteration zwei modifizierte Zufallszahlen erzeugt werden, und Erzeugen modifizierter randomisierter Signale, für die der Übertragungseffizienzkoeffizient größer ist als der Übertragungseffizienzkoeffizient der randomisierten Signale, durch Verwenden der zwei modifizierten Zufallszahlen.

6. Übertragungssystem nach Anspruch 5, wobei das Bestimmungssystem (310) einer optimalen Effizienz Folgendes umfasst:

eine Modifikationseinheit (311), die konfiguriert ist zum (i) Empfangen der elektrischen Signale für die der Übertragungseffizienzkoeffizient kleiner ist als der vorbestimmte Schwellenwert, aus der Vergleichseinheit (24) und (ii) Empfangen der entsprechenden zwei Zufallszahlen für jedes elektrische Signal von der Randomisierungseinheit (26) und (iii) subiteratives Modifizieren der elektrischen Signale, wodurch die modifizierten randomisierten Signale erzeugt werden;
eine Effizienzbestimmungs-Subeinheit (312), die stromabwärts der Modifikationseinheit (311) eingerichtet ist, die dazu konfiguriert ist, subiterativ die modifizierten randomisierten Signale von der Modifikationseinheit (311) zu empfangen und einen Übertragungseffizienzkoeffizienten für diese modifizierten randomisierten Signale zu berechnen;
eine Speichereinheit (314), die dazu konfiguriert ist, den Transmissionseffizienzkoeffizienten für die modifizierten randomisierten Signale und einen entsprechenden Erregungsvektor, der von der Effizienzbestimmungs-Subeinheit (312) subiterativ empfangen wird, zu speichern, und den Übertragungseffizienzkoeffizient für die randomisierten Signale und einen entsprechenden randomisierten Vektor, der iterativ von der Effizienzbestimmungs-

Einheit erhalten wird, zu speichern; und
eine Vergleichs-Subeinheit (313), die mit der Speichereinheit (314) gekoppelt ist und konfiguriert ist zum subiterativen Empfangen eines gespeicherten Effizienzkoeffizienten von der Speichereinheit (314) und des Übertragungseffizienzkoeffizienten für die modifizierten randomisierten Signale von der Effizienzbestimmungs-Subeinheit (312),
subiterativen Vergleichen des gespeicherten Effizienzkoeffizienten mit dem Übertragungseffizienzkoeffizienten der modifizierten randomisierten Signale, und
Bereitstellen des Übertragungseffizienzkoeffizienten für die modifizierten randomisierten Signale und des entsprechenden Erregungsvektors an die Speichereinheit (314) zu deren Speichern, wenn der Wert dieses Übertragungseffizienzkoeffizienten für die modifizierten randomisierten Signale größer ist als der Wert des gespeicherten Effizienzkoeffizienten.

**7.** Verfahren zum Übertragen von Hochfrequenzstrahlung (HF-Strahlung) in einer vorbestimmten Richtung bei einer Sequenz von *K* Frequenzen durch ein Antennen-Array (14), das eine vorbestimmte Anzahl *N* von Antennenelementen umfasst, das Folgendes umfasst:

Erzeugen elektrischer Signale, die eine anfängliche Amplitude und eine anfängliche Phase bei einer Sequenz von *K* Frequenzen aufweisen;
Verarbeiten der elektrischen Signale und Gewinnen optimaler elektrischer Signale, für die der Übertragungseffizienzkoeffizient gleich oder größer ist als ein vorbestimmter Schwellenwert, wobei die optimalen elektrischen Signale optimale unmodifizierte Signale und optimale modifizierte Signale beinhalten;
Erzeugen elektrischer Lenksignale, die die optimalen elektrischen Signale betreffen; und
Bilden eines gelenkten Strahls basierend auf den elektrischen Lenksignalen zur Übertragung in der vorbestimmten Richtung;
wobei das Gewinnen der optimalen elektrischen Signale Folgendes umfasst:

Berechnen eines Übertragungseffizienzkoeffizienten für jede *k-te* Frequenz $f_k$ der K Frequenzen;
Vergleichen des Übertragungseffizienzkoeffizienten für jede *k-te* Frequenz $f_k$ mit einem vorbestimmten Schwellenwert;
Trennen elektrischer Signale, die den Frequenzen entsprechen, für die der Übertragungseffizienzkoeffizient kleiner ist als der vorbestimmte Schwellenwert von den elektrischen Signalen, die den Frequenzen entsprechen, für die der Übertragungseffizienzkoeffizient gleich oder größer ist als der vorbestimmte Schwellenwert;
iterativ Modifizieren der elektrischen Signale die den Frequenzen entsprechen, für die der Übertragungseffizienzkoeffizient kleiner ist als der vorbestimmte Schwellenwert durch Randomisieren von Amplitude und Phase dieser elektrischen Signale, wodurch randomisierte Signale erzeugt werden; und
Bereitstellen optimaler elektrischer Signale einschließlich optimaler unmodifizierter Signale und optimaler modifizierter Signale, wobei die optimalen modifizierten Signale die randomisierten Signale sind, für die der Übertragungseffizienzkoeffizient gleich oder größer ist als der vorbestimmte Schwellenwert, und die optimalen unmodifizierten Signale die elektrischen Signale sind, die die anfängliche Amplitude und die anfängliche Phase aufweisen, für die der Übertragungseffizienzkoeffizient gleich oder größer als der vorbestimmte Schwellenwert ist.

**8.** Verfahren nach Anspruch 7, wobei das iterative Modifizieren der elektrischen Signale, die den Frequenzen entsprechen, für die der Übertragungseffizienzkoeffizient kleiner als der vorbestimmte Schwellenwert ist, durchgeführt wird, bis der Übertragungseffizienzkoeffizient für diese elektrischen Signale gleich oder größer als der vorbestimmte Schwellenwert ist, wodurch die optimalen modifizierten Signale erzeugt werden.

**9.** Verfahren nach Anspruch 7, wobei der Übertragungseffizienzkoeffizient berechnet wird durch:

$$T_k = \frac{E_{trans}}{E_{total}} \cdot 100\% \quad ,$$

wobei $E_{total}$ die gesamte Energie der elektrischen Signale für die *k-te* Frequenz $f_k$ ist, $E_{trans}$ die Energie ist, die beim Betrieb für die *k-te* Frequenz $f_k$ übertragen wird, und wobei $E_{trans}$ berechnet wird durch $E_{trans} = E_{total} - E_{lost}$*, wobei* $E_{lost}$ die Energie ist, die beim Betrieb für die *k-te* Frequenz $f_k$ verloren geht.

**10.** Verfahren nach Anspruch 9, wobei die Verlustenergie $E_{lost}$ berechnet wird durch:

$$E_{lost} = \sum_{n=1}^{N} |\widetilde{s}|_n$$

wobei $\widetilde{S_n}$ eine kombinierte Energie ist, die ein *n-tes* Antennenelement in dem Antennen-Array (14) von benachbarten Antennenelementen empfängt, und einer selbstreflektierten Energie des *n-ten* Antennenelements ist;

wobei die kombinierte Energie $\widetilde{S_n}$ berechnet wird durch:

$$\begin{pmatrix} \widetilde{S_1} \\ \widetilde{S_2} \\ \widetilde{S_3} \\ \vdots \\ \widetilde{S_N} \end{pmatrix} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix} \cdot \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix},$$

wobei $V_k^{init} = \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}_k$ ein anfänglicher Erregungsvektor ist, der die elektrischen Signale für *N* Übertragungskanäle für jede *k-te* Frequenz $f_k$ darstellt, und $S = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix}$ eine Kopplungsmatrix ist, die gegenseitiges Koppeln zwischen Antennenelementen und der selbstreflektierten Energie der Antennenelemente in dem Antennen-Array (14 ist; und
wobei die übertragene Energie $E_{trans}$ des Übertragungssystems berechnet wird durch:

$$E_{trans} = E_{total} - E_{lost} = \sum_{n=1}^{N} |A_n e^{j\varphi_n}| - \sum_{n=1}^{N} |\widetilde{s}|_n$$

**11.** Verfahren nach Anspruch 7, wobei das Randomisieren der Amplitude und der Phase der elektrischen Signale durch Erzeugen zweier Zufallszahlen jeweils in dem Intervall [0, 1] und entsprechendes Multiplizieren der anfänglichen Amplitude und der anfänglichen Phase der elektrischen Signale mit den zwei Zufallszahlen durchgeführt wird.

**Revendications**

**1.** Système d'émission (10) pour émettre un rayonnement radioélectrique (RF) dans une direction prédéterminée à une séquence de *K* fréquences par un réseau d'antennes (14) comprenant un nombre prédéterminé *N* d'éléments d'antenne, comprenant :

un générateur de signaux RF (11) configuré pour générer des signaux électriques ayant une amplitude initiale et une phase initiale par l'intermédiaire de *N* canaux d'émission correspondant à *N* éléments d'antenne, à la séquence de *K* fréquences ;
un système de modification (12) agencé en aval du générateur de signaux RF (11), configuré pour recevoir et traiter les signaux électriques en provenance dudit générateur de signaux RF (11) pour obtenir des signaux

électriques optimaux pour lesquels un coefficient de rendement d'émission du système d'émission est supérieur ou égal à une valeur seuil prédéterminée, les signaux électriques optimaux comprenant des signaux optimaux non modifiés fournis par le générateur de signaux RF (11) et des signaux optimaux modifiés générés par le système de modification (12) ; et
un système de pilotage (13) agencé en aval dudit système de modification (12) et couplé audit réseau d'antennes (14), et configuré pour (i) recevoir les signaux électriques optimaux obtenus auprès du système de modification (12), (ii) générer des signaux électriques de pilotage liés aux signaux électriques optimaux et (iii) relayer les signaux électriques de pilotage par l'intermédiaire des *N* canaux d'émission vers le réseau d'antennes (14) pour former un faisceau piloté pour une émission dans la direction prédéterminée ;
le système de modification (12) comprenant :

une unité de détermination de rendement (22) configurée pour recevoir les signaux électriques à la séquence de *K* fréquences en provenance du générateur de signaux RF (11) et pour calculer le coefficient de rendement d'émission du système d'émission pour chaque $k^e$ fréquence $f_k$ ;
une unité de comparaison (24) configurée pour

recevoir le coefficient de rendement d'émission pour chaque $k^e$ fréquence $f_k$ en provenance de l'unité de détermination de rendement (22),
comparer le coefficient de rendement d'émission à la valeur seuil prédéterminée,
séparer les signaux électriques correspondant aux fréquences pour lesquelles le coefficient de rendement d'émission est inférieur à la valeur seuil prédéterminée des signaux électriques correspondant aux fréquences pour lesquelles le coefficient de rendement d'émission est supérieur ou égal à la valeur seuil prédéterminée, et
fournir au système de pilotage (13) les signaux électriques correspondant aux fréquences pour lesquelles le coefficient de rendement d'émission est supérieur ou égal à la valeur seuil prédéterminée ; et
une unité d'aléatoirisation (26) configurée pour
recevoir les signaux électriques correspondant aux fréquences pour lesquelles le coefficient de rendement d'émission est inférieur à la valeur seuil prédéterminée,
modifier de manière itérative ces signaux électriques en aléatoirisant l'amplitude et la phase de ces signaux électriques, de manière à générer des signaux aléatoirisés, chaque signal aléatoirisé ayant une amplitude aléatoirisée et une phase aléatoirisée correspondantes, et
fournir, à chaque itération, lesdits signaux aléatoirisés à l'unité de détermination de rendement (22) pour calculer le coefficient de rendement d'émission pour lesdits signaux aléatoirisés, les signaux optimaux modifiés étant les signaux aléatoirisés pour lesquels le coefficient de rendement d'émission est supérieur ou égal à la valeur seuil prédéterminée et les signaux optimaux non modifiés étant des signaux électriques ayant ladite amplitude initiale et ladite phase initiale pour lesquels le coefficient de rendement d'émission est supérieur ou égal à la valeur seuil prédéterminée.

**2.** Système d'émission selon la revendication 1, le système d'aléatoirisation (12) étant configuré pour réaliser une modification itérative des signaux électriques correspondant aux fréquences pour lesquelles le coefficient de rendement d'émission est inférieur à la valeur seuil prédéterminée jusqu'à ce que le coefficient de rendement d'émission pour ces signaux électriques soit supérieur ou égal à ladite valeur seuil prédéterminée.

**3.** Système d'émission selon l'une quelconque des revendications 1 et 2, le coefficient de rendement d'émission étant calculé selon :

$$T_k = \frac{E_{trans}}{E_{total}} \cdot 100\%,$$

$E_{total}$ étant l'énergie totale des signaux électriques pour la $k^e$ fréquence $f_k$ générée par le générateur de signaux RF et $E_{trans}$ étant l'énergie émise en service pour la $k^e$ fréquence $f_k$, et $E_{trans}$ étant calculée par l'unité de détermination de rendement (22) selon $E_{trans} = E_{total} - E_{lost}$, $E_{lost}$ étant l'énergie qui est perdue par le système d'émission en service pour la $k^e$ fréquence $f_k$ ;

l'énergie perdue $E_{lost}$ étant calculée selon :

$$E_{lost} = \sum_{n=1}^{N} |\widetilde{s}|_n,$$

$\widetilde{S_n}$ étant une énergie combinée qu'un $n^e$ élément d'antenne ($n$ = 1, 2, ..., N) dans le réseau d'antennes (14) reçoit en provenance d'éléments d'antenne voisins et une énergie auto-réfléchie du $n^e$ élément d'antenne ; ladite énergie combinée $\widetilde{S_n}$ étant calculée selon :

$$\begin{pmatrix} \widetilde{S_1} \\ \widetilde{S_2} \\ \widetilde{S_3} \\ \vdots \\ \widetilde{S_N} \end{pmatrix} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix} \cdot \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix},$$

$V_k^{init} = \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}_k$ étant un vecteur d'excitation initial représentant les signaux électriques pour $N$ canaux d'émission pour chaque $k^e$ fréquence $f_k$, et $S = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix}$ étant une matrice de couplage caractérisant un couplage mutuel entre des éléments d'antenne et une énergie auto-réfléchie des éléments d'antenne dans le réseau d'antennes (14) ; et

l'énergie émise $E_{trans}$ du système d'émission étant calculée selon :

$$E_{trans} = E_{total} - E_{lost} = \sum_{n=1}^{N} |A_n e^{j\varphi_n}| - \sum_{n=1}^{N} \widetilde{|S|}_n.$$

**4.** Système d'émission selon la revendication 1, l'aléatoirisation de l'amplitude et de la phase des signaux électriques étant réalisée en générant de manière itérative deux nombres aléatoires, chacun dans l'intervalle [0, 1], et en multipliant l'amplitude initiale et la phase initiale desdits signaux électriques par les deux nombres aléatoires, de manière correspondante ; de manière à générer lesdits signaux aléatoirisés.

**5.** Système d'émission selon l'une quelconque des revendications 1 à 4, le système d'aléatoirisation (12) comprenant en outre un système de détermination de rendement optimal (310) agencé en aval de l'unité d'aléatoirisation (26) et couplé à l'unité de comparaison (24) et à l'unité de détermination de rendement (22), ledit système de détermination de rendement optimal (310) étant configuré pour modifier de manière sous-itérative lesdits deux nombres aléatoires, de manière à générer, dans chaque sous-itération, deux nombres aléatoires modifiés et à générer des signaux aléatoires modifiés pour lesquels le coefficient de rendement d'émission est supérieur au coefficient de rendement d'émission des signaux aléatoirisés au moyen desdits deux nombres aléatoires modifiés.

**6.** Système d'émission selon la revendication 5, le système de détermination de rendement optimal (310) comprenant :

une unité de modification (311), configurée pour (i) recevoir, en provenance de l'unité de comparaison (24), les signaux électriques pour lesquels le coefficient de rendement d'émission est inférieur à la valeur seuil prédéterminée et (ii) recevoir, en provenance de l'unité d'aléatoirisation (26), les deux nombres aléatoires correspondants pour chaque signal électrique et (iii) modifier de manière sous-itérative lesdits signaux électriques, de manière à générer lesdits signaux aléatoirisés modifiés ;

une sous-unité de détermination de rendement (312) agencée en aval de l'unité de modification (311), configurée pour recevoir de manière sous-itérative, en provenance de l'unité de modification (311), les signaux aléatoirisés modifiés et calculer un coefficient de rendement d'émission pour ces signaux aléatoirisés modifiés ;

une unité de stockage (314), configurée pour stocker le coefficient de rendement d'émission pour les signaux aléatoirisés modifiés et un vecteur d'excitation correspondant reçu de manière sous-itérative en provenance de la sous-unité de détermination de rendement (312), et pour stocker le coefficient de rendement d'émission pour

les signaux aléatoirisés et un vecteur aléatoirisé correspondant obtenu de manière itérative auprès de l'unité de détermination de rendement ; et
une sous-unité de comparaison (313) couplée à l'unité de stockage (314), configurée pour
recevoir de manière sous-itérative un coefficient de rendement stocké en provenance de l'unité de stockage (314) et le coefficient de rendement d'émission pour les signaux aléatoirisés modifiés en provenance de la sous-unité de détermination de rendement (312),
comparer de manière sous-itérative le coefficient de rendement stocké au coefficient de rendement d'émission des signaux aléatoirisés modifiés, et
fournir le coefficient de rendement d'émission pour les signaux aléatoirisés modifiés et le vecteur d'excitation correspondant à l'unité de stockage (314) pour leur stockage lorsque la valeur de ce coefficient de rendement d'émission pour les signaux aléatoirisés modifiés est supérieure à la valeur dudit coefficient de rendement stocké.

**7.** Procédé d'émission d'un rayonnement radioélectrique (RF) dans une direction prédéterminée à une séquence de *K* fréquences par un réseau d'antennes (14) comprenant un nombre prédéterminé *N* d'éléments d'antenne, consistant à :

générer des signaux électriques ayant une amplitude initiale et une phase initiale à une séquence de *K* fréquences ;
traiter les signaux électriques et obtenir des signaux électriques optimaux pour lesquels le coefficient de rendement d'émission est supérieur ou égal à une valeur seuil prédéterminée, les signaux électriques optimaux comprenant des signaux optimaux non modifiés et des signaux optimaux modifiés ;
générer des signaux électriques de pilotage liés aux signaux électriques optimaux ; et
former un faisceau piloté sur la base des signaux électriques de pilotage pour l'émission dans la direction prédéterminée ;
l'obtention des signaux électriques optimaux consistant à :

calculer un coefficient de rendement d'émission pour chaque $k^e$ fréquence $f_k$ de la séquence de K fréquences ;
comparer le coefficient de rendement d'émission pour chaque $k^e$ fréquence $f_k$ à une valeur seuil prédéterminée ;
séparer les signaux électriques correspondant aux fréquences pour lesquelles le coefficient de rendement d'émission est inférieur à la valeur seuil prédéterminée des signaux électriques correspondant aux fréquences pour lesquelles le coefficient de rendement d'émission est supérieur ou égal à la valeur seuil prédéterminée ;
modifier de manière itérative les signaux électriques correspondant aux fréquences pour lesquelles le coefficient de rendement d'émission est inférieur à la valeur seuil prédéterminée en aléatoirisant l'amplitude et la phase de ces signaux électriques, de manière à générer des signaux aléatoirisés ; et
fournir des signaux électriques optimaux comprenant des signaux optimaux non modifiés et des signaux optimaux modifiés, les signaux optimaux modifiés étant les signaux aléatoirisés pour lesquels le coefficient de rendement d'émission est supérieur ou égal à la valeur seuil prédéterminée et les signaux optimaux non modifiés étant les signaux électriques ayant ladite amplitude initiale et ladite phase initiale pour lesquels le coefficient de rendement d'émission est supérieur ou égal à la valeur seuil prédéterminée.

**8.** Procédé selon la revendication 7, la modification itérative des signaux électriques correspondant aux fréquences pour lesquelles le coefficient de rendement d'émission est inférieur à la valeur seuil prédéterminée étant réalisée jusqu'à ce que le coefficient de rendement d'émission pour ces signaux électriques soit supérieur ou égal à ladite valeur seuil prédéterminée, de manière à générer les signaux optimaux modifiés.

**9.** Procédé selon la revendication 7, le coefficient de rendement d'émission étant calculé selon :

$$T_k = \frac{E_{trans}}{E_{total}} \cdot 100\%,$$

$E_{total}$ étant l'énergie totale des signaux électriques pour la $k^e$ fréquence $f_k$, $E_{trans}$ étant l'énergie émise en service pour la $k^e$ fréquence $f_k$, et $E_{trans}$ étant calculée selon $E_{trans} = E_{total} - E_{lost}$, $E_{lost}$ étant l'énergie qui est perdue en service pour la $k^e$ fréquence $f_k$.

**10.** Procédé selon la revendication 9, l'énergie perdue $E_{lost}$ étant calculée selon :

$$E_{lost} = \sum_{n=1}^{N} |\widetilde{s}|_n,$$

$\widetilde{s_n}$ étant une énergie combinée qu'un $n^e$ élément d'antenne dans le réseau d'antennes (14) reçoit en provenance d'éléments d'antenne voisins et une énergie auto-réfléchie du $n^e$ élément d'antenne ;

ladite énergie combinée $\widetilde{s_n}$ étant calculée selon :

$$\begin{pmatrix} \widetilde{s_1} \\ \widetilde{s_2} \\ \widetilde{s_3} \\ \vdots \\ \widetilde{s_N} \end{pmatrix} = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix} \cdot \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix},$$

$V_k^{init} = \begin{pmatrix} A_1 e^{j\varphi_1} \\ A_2 e^{j\varphi_2} \\ A_3 e^{j\varphi_3} \\ \vdots \\ A_N e^{j\varphi_N} \end{pmatrix}_k$ étant un vecteur d'excitation initial représentant les signaux électriques pour $N$ canaux d'émission pour chaque $k^e$ fréquence $f_k$, et $S = \begin{pmatrix} s_{1_1} & s_{1_2} & s_{1_3} & \cdots & s_{1_N} \\ s_{2_1} & s_{2_2} & s_{2_3} & \cdots & s_{2_N} \\ s_{3_1} & s_{3_2} & s_{3_3} & \cdots & s_{3_N} \\ \vdots & \vdots & \vdots & \ddots & \vdots \\ s_{N_1} & s_{N_2} & \cdots s_{N_3} & \cdots & s_{N_N} \end{pmatrix}$ étant une matrice de couplage caractérisant un couplage mutuel entre des éléments d'antenne et l'énergie auto-réfléchie des éléments d'antenne dans le réseau d'antennes (14) ; et

l'énergie émise $E_{trans}$ du système d'émission étant calculée selon :

$$E_{trans} = E_{total} - E_{lost} = \sum_{n=1}^{N} |A_n e^{j\varphi_n}| - \sum_{n=1}^{N} |\widetilde{s}|_n$$

**11.** Procédé selon la revendication 7, l'aléatoirisation de l'amplitude et de la phase des signaux électriques étant réalisée en générant deux nombres aléatoires, chacun dans l'intervalle [0, 1], et en multipliant l'amplitude initiale et la phase initiale desdits signaux électriques par les deux nombres aléatoires, de manière correspondante.

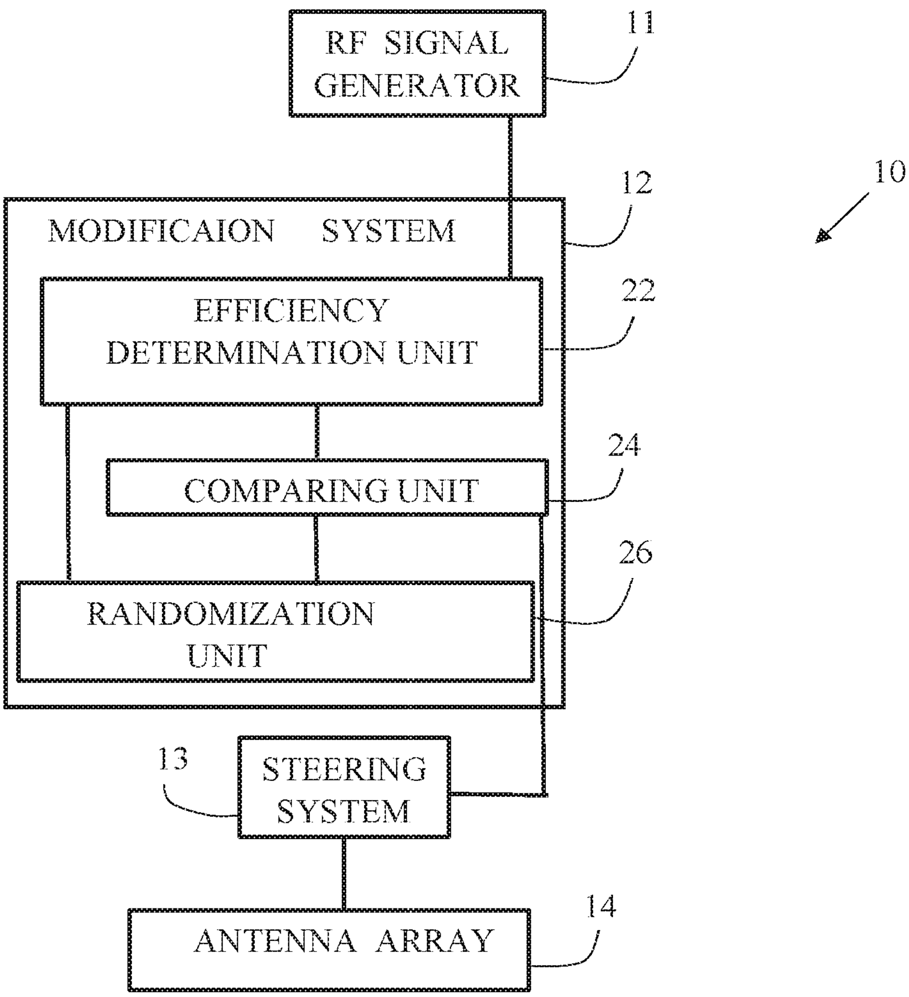
RF SIGNAL GENERATOR
11
10
MODIFICAION SYSTEM
12
EFFICIENCY DETERMINATION UNIT
22
COMPARING UNIT
24
RANDOMIZATION UNIT
26
13
STEERING SYSTEM
ANTENNA ARRAY
14

FIG. 1

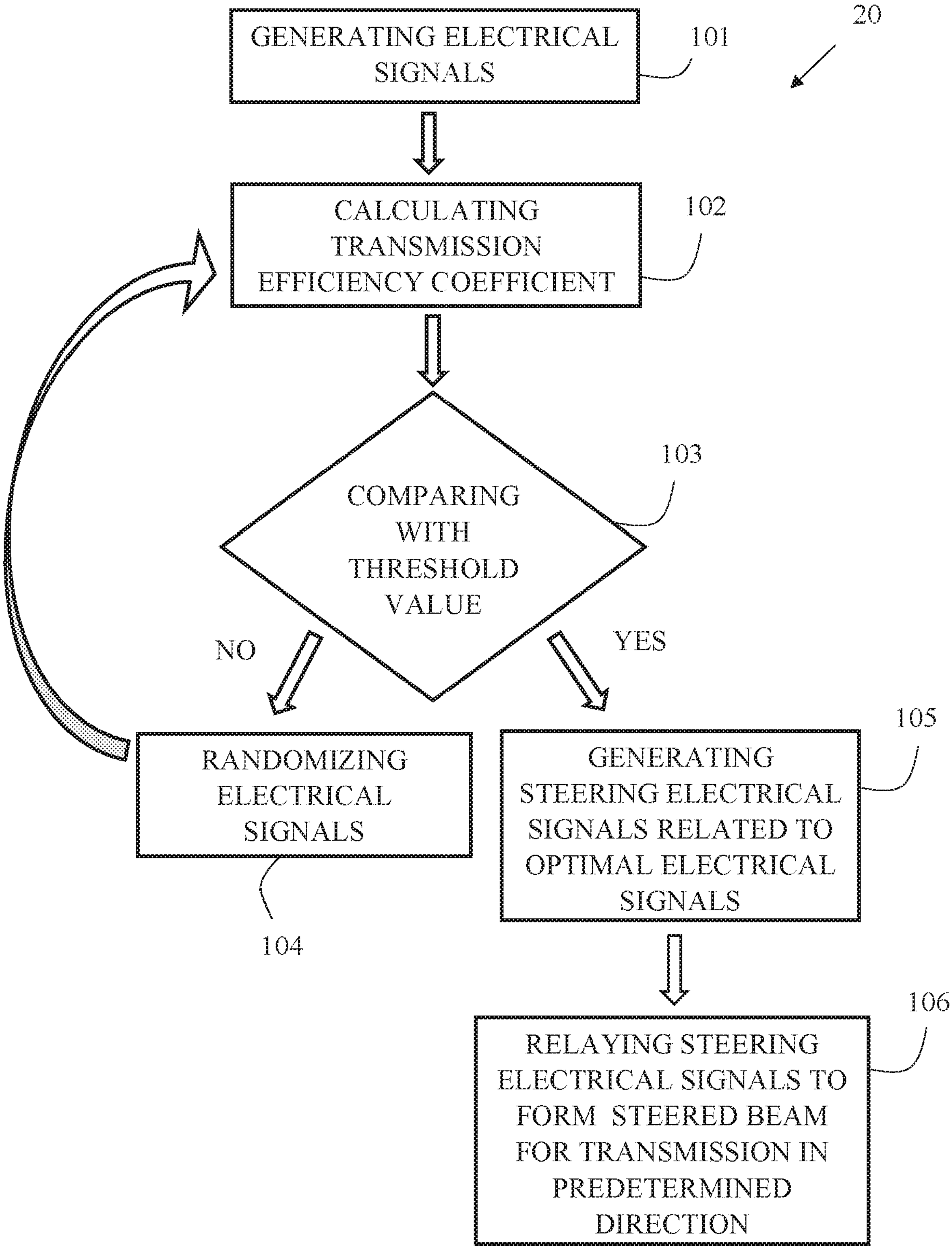
GENERATING ELECTRICAL SIGNALS
101
20
CALCULATING TRANSMISSION EFFICIENCY COEFFICIENT
102
COMPARING WITH THRESHOLD VALUE
103
NO
YES
RANDOMIZING ELECTRICAL SIGNALS
104
GENERATING STEERING ELECTRICAL SIGNALS RELATED TO OPTIMAL ELECTRICAL SIGNALS
105
RELAYING STEERING ELECTRICAL SIGNALS TO FORM STEERED BEAM FOR TRANSMISSION IN PREDETERMINED DIRECTION
106

FIG. 2

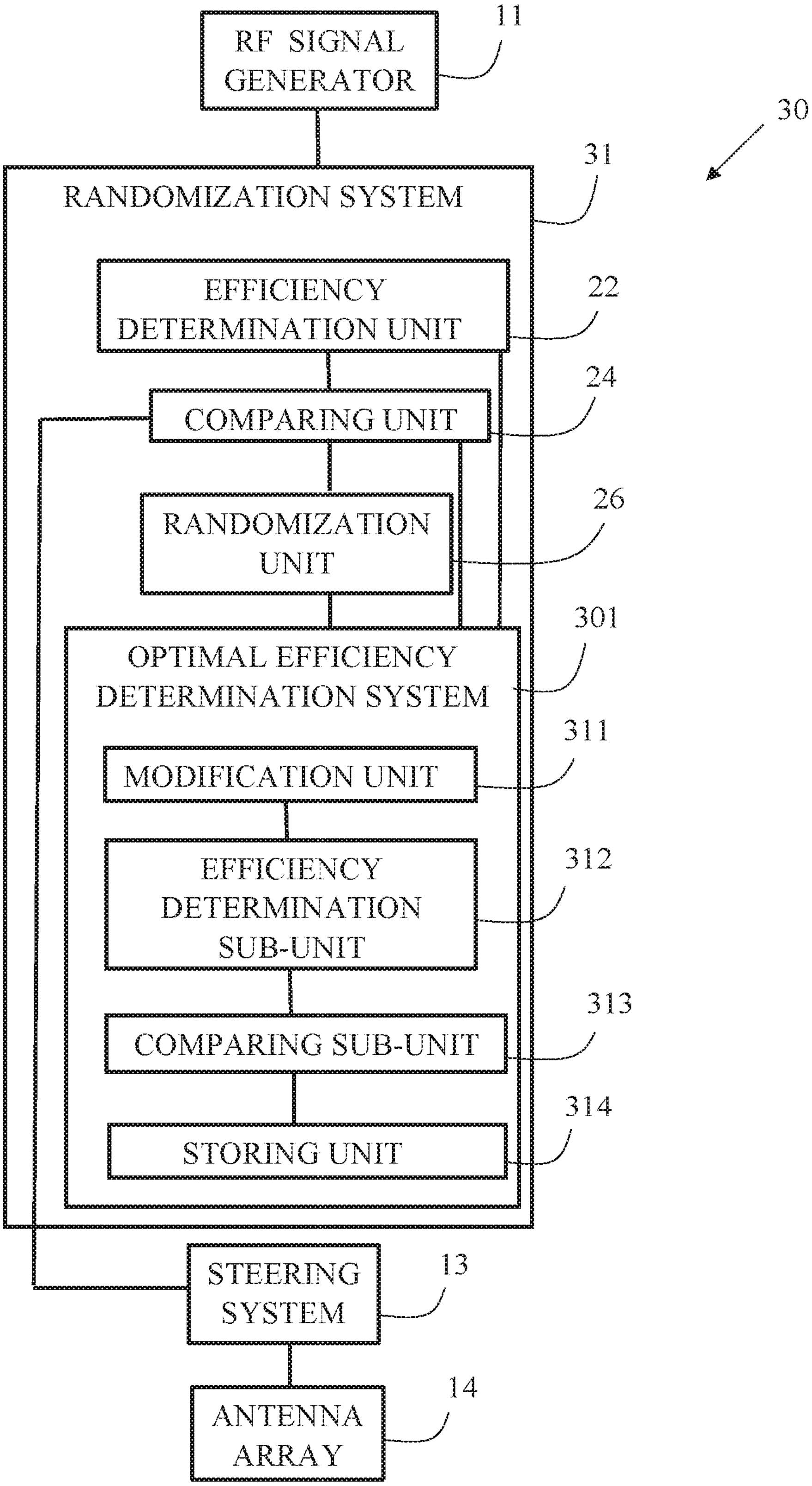
RF SIGNAL GENERATOR
11
30
RANDOMIZATION SYSTEM
31
EFFICIENCY DETERMINATION UNIT
22
COMPARING UNIT
24
RANDOMIZATION UNIT
26
OPTIMAL EFFICIENCY DETERMINATION SYSTEM
301
MODIFICATION UNIT
311
EFFICIENCY DETERMINATION SUB-UNIT
312
COMPARING SUB-UNIT
313
STORING UNIT
314
STEERING SYSTEM
13
ANTENNA ARRAY
14

FIG. 3

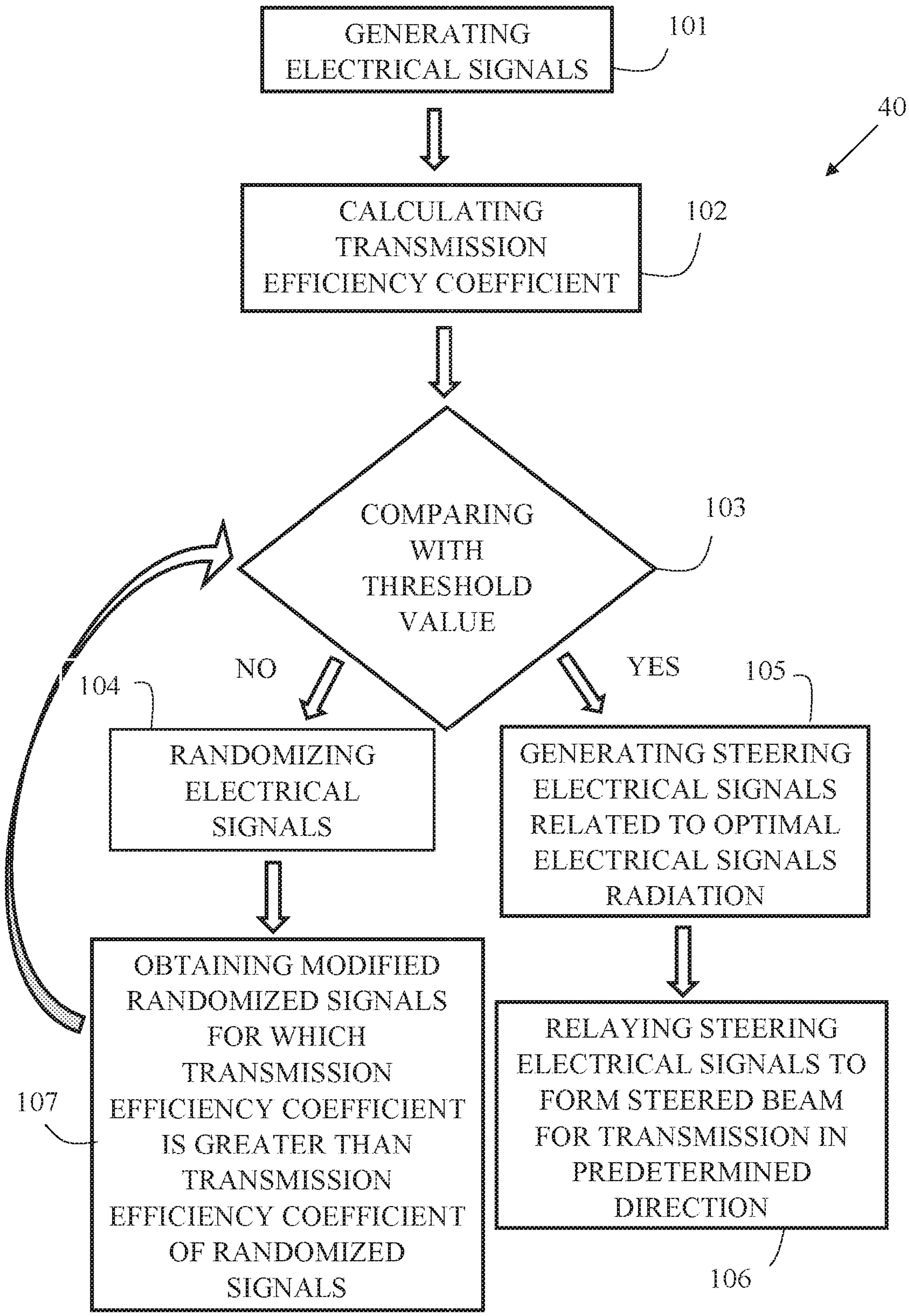
GENERATING ELECTRICAL SIGNALS
101
40
CALCULATING TRANSMISSION EFFICIENCY COEFFICIENT
102
COMPARING WITH THRESHOLD VALUE
103
NO
YES
104
105
RANDOMIZING ELECTRICAL SIGNALS
GENERATING STEERING ELECTRICAL SIGNALS RELATED TO OPTIMAL ELECTRICAL SIGNALS RADIATION
OBTAINING MODIFIED RANDOMIZED SIGNALS FOR WHICH TRANSMISSION EFFICIENCY COEFFICIENT IS GREATER THAN TRANSMISSION EFFICIENCY COEFFICIENT OF RANDOMIZED SIGNALS
107
RELAYING STEERING ELECTRICAL SIGNALS TO FORM STEERED BEAM FOR TRANSMISSION IN PREDETERMINED DIRECTION
106

FIG. 4

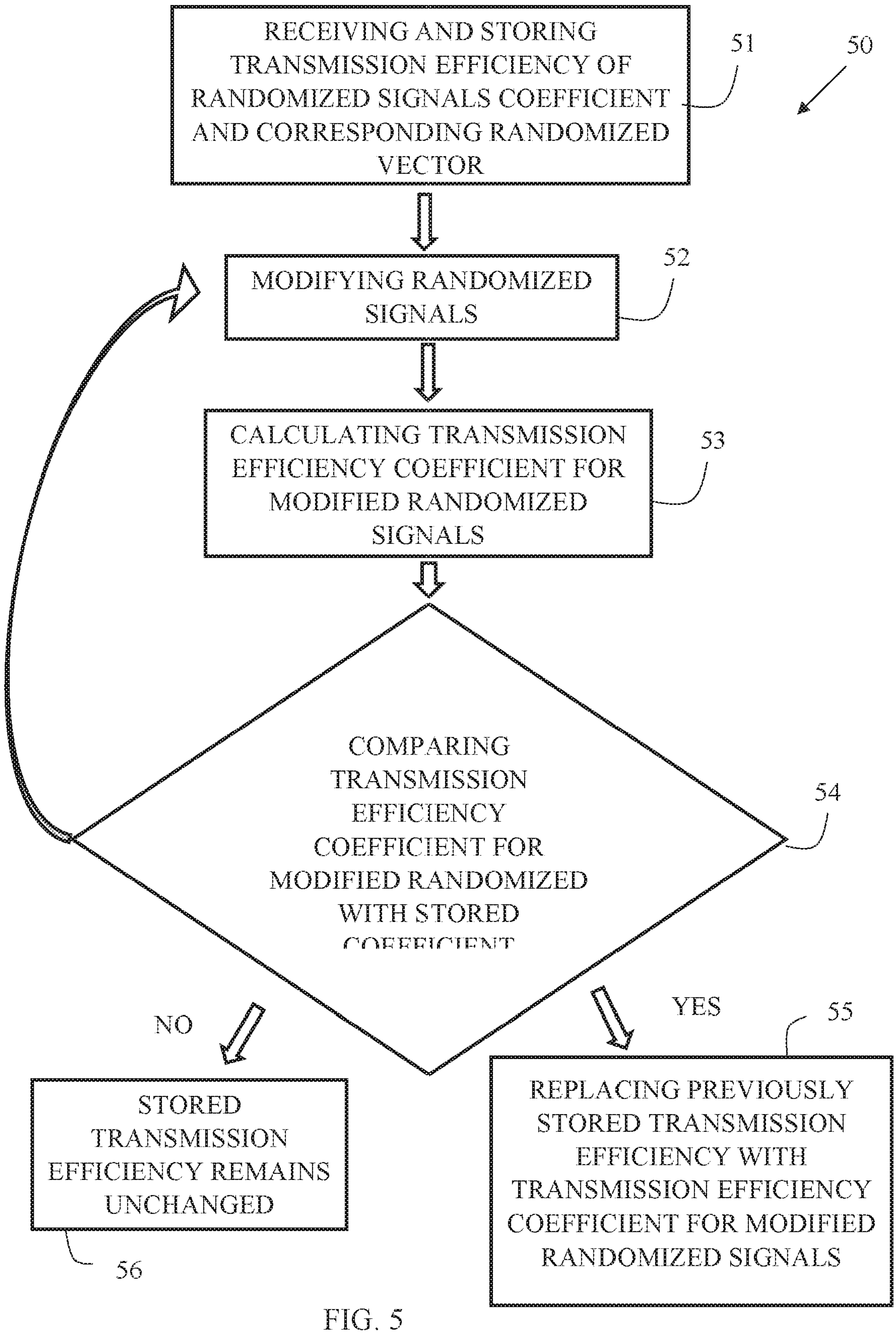
RECEIVING AND STORING TRANSMISSION EFFICIENCY OF RANDOMIZED SIGNALS COEFFICIENT AND CORRESPONDING RANDOMIZED VECTOR
51
50
MODIFYING RANDOMIZED SIGNALS
52
CALCULATING TRANSMISSION EFFICIENCY COEFFICIENT FOR MODIFIED RANDOMIZED SIGNALS
53
COMPARING TRANSMISSION EFFICIENCY COEFFICIENT FOR MODIFIED RANDOMIZED WITH STORED
54
NO
YES
55
STORED TRANSMISSION EFFICIENCY REMAINS UNCHANGED
56
REPLACING PREVIOUSLY STORED TRANSMISSION EFFICIENCY WITH TRANSMISSION EFFICIENCY COEFFICIENT FOR MODIFIED RANDOMIZED SIGNALS

FIG. 5

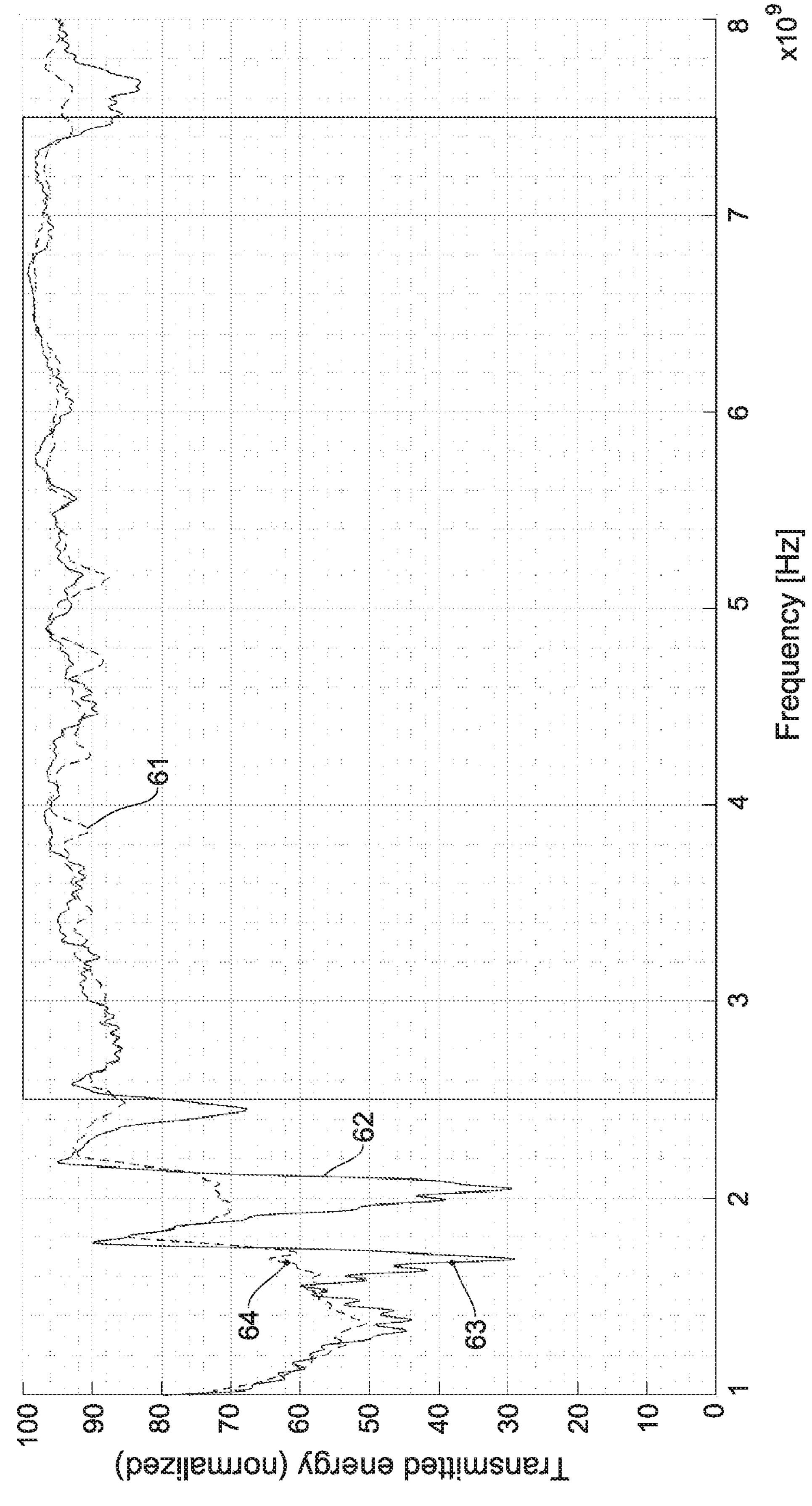
Transmitted energy (normalized)
100
90
80
70
60
50
40
30
20
10
0
1
2
3
4
5
6
7
8
x10^9
Frequency [Hz]
61
62
63
64

FIG. 6

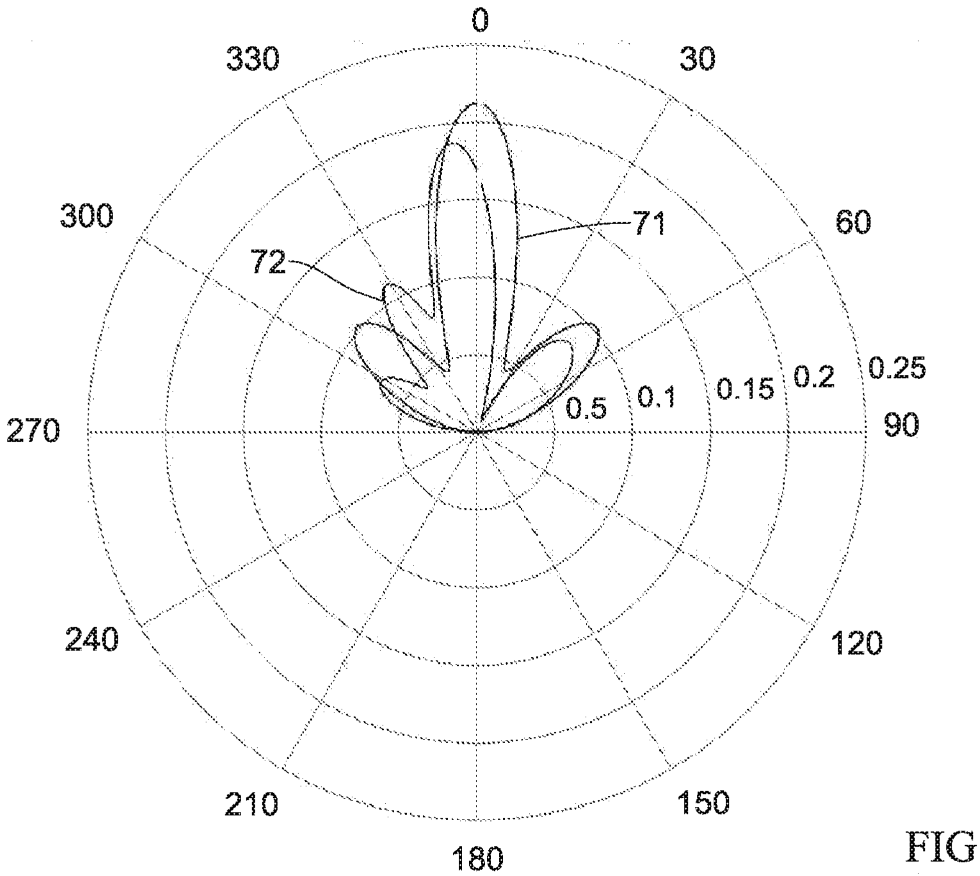
0
30
60
90
120
150
180
210
240
270
300
330
71
72
0.5
0.1
0.15
0.2
0.25

FIG. 7A

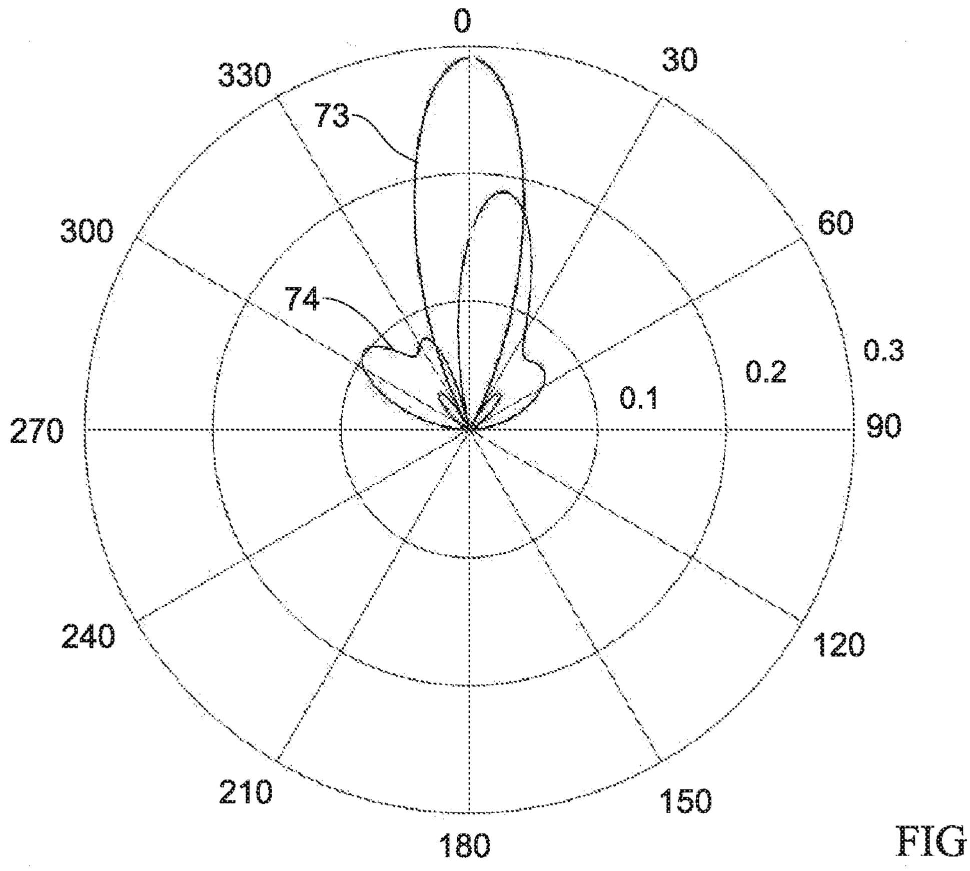
0
30
60
90
120
150
180
210
240
270
300
330
73
74
0.1
0.2
0.3

FIG. 7B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016308597 A
- US 2005018597 A